# EUROPÄISCHE PATENTSCHRIFT

(11) **EP 2 072 998 B1**
(45) Veröffentlichungstag und Bekanntmachung des Hinweises auf die Patenterteilung: **13.11.2013**
(21) Anmeldenummer: 08021417.4
(22) Anmeldetag: 10.12.2008
(51) Int. Cl.: G01N 21/64, G01J 3/02

(54) **Vorrichtung zur wahlweisen Messung von insbesondere Lumineszenz und/oder Fluoreszenzstrahlung**
Device for the optional measurement of in particular luminescence and/or fluorescence radiation
Dispositif destiné à la mesure sélective, notamment de la luminescence et/ou de son rayonnement

(30) Priorität: 21.12.2007 DE 202007017895 U; 23.07.2008 DE 202008009859 U
(43) Veröffentlichungstag der Anmeldung: 24.06.2009
(73) Patentinhaber: Berthold Technologies GmbH & Co. KG, 75323 Bad Wildbad (DE)
(72) Erfinder: Klaiber, Norbert, 75337 Enzklösterle (DE); Berthold, Fritz, 75173 Pforzheim (DE)
(74) Vertreter: Schön, Thilo

(56) Entgegenhaltungen:
- EP-A- 0 424 634
- EP-A- 0 539 743
- EP-A2- 0 803 724
- EP-A2- 0 864 846
- WO-A-00/04364
- WO-A2-00/43750
- DE-A1- 19 841 931
- GB-A- 2 323 234
- JP-A- 10 019 779
- JP-A- 2002 236 223
- JP-A- 2005 331 827
- US-A- 5 127 729
- US-A- 5 318 024
- US-A- 5 614 726
- US-A- 6 097 025
- US-A1- 2003 042 428
- US-A1- 2003 232 445
- US-A1- 2005 110 996
- US-A1- 2006 060 189
- US-A1- 2006 119 845
- US-A1- 2007 153 368
- US-B1- 6 714 297
- US-B2- 7 057 712
- DIAZ-ANZURES J ET AL: "Low-frequency Fresnel mirrors for fluorescence detectors" ASTROPARTICLE PHYSICS ELSEVIER NETHERLANDS, Bd. 21, Nr. 4, Juli 2004 (2004-07), Seiten 407-413, XP002523805 ISSN: 0927-6505
- DREZET ET AL: "Surface plasmon mediated near-field imaging and optical addressing in nanoscience" MICRON, PERGAMON, OXFORD, GB, Bd. 38, Nr. 4, 26. Januar 2007 (2007-01-26), Seiten 427-437, XP005738165 ISSN: 0968-4328
- ANONYMOUS: "Fiber Optic Measuring Head for Surface Examination. January 1982." IBM TECHNICAL DISCLOSURE BULLETIN, Bd. 24, Nr. 8, 1. Januar 1982 (1982-01-01) , Seiten 4280-4281, XP002534906 New York, US

## Beschreibung

### Technischer Hintergrund

Im Zuge der zurückgehenden Budgets und schwieriger Kostenstruktur im Forschungsbereich sind verschiedene Hersteller von Mikroplattengeräten zu mehrfach einsetzbaren Geräten übergegangen. Dem Kunden möchte man damit ein Mehrzweckgerät für möglichst viele Applikationen zur Verfügung stellen, so dass die Anschaffung mehrerer Einzelgeräte entfällt. Trotz des höheren Preises, verglichen mit einem dedizierten Gerät, erfreuen sich diese Mehrzweckgeräte großer Nachfrage. Dem Kunden wird suggeriert, dass mit dem einen Kauf der Kauf von einzelnen Geräten überflüssig ist, und dass der Preis des Multigerätes unter der Summe der dedizierten Geräte liegt. Zur Zeit gibt es eine Vielzahl von verschiedenen Geräten angefangen vom "dual label" Gerät für Lumineszenz- und Fluoreszenzmessungen in der untersten Kategorie, über "Multilabelreader" mit Fluoreszenz, Lumineszenz und Photometrie im mittleren Preissegment bis hin zu den "High-End"-Geräten für Lumineszenz, Fluoreszenz, Photometrie, Fluoreszenz - Polarisation, Bioluminescence Resonance Energy Transfer (BRET), Fluorescence Resonance Energy Transfer (FRET), Time Resolved Fluorescence (TRF), Liquid Scintillation Counting (LSC) in den verschiedensten Kombinationen.

Leider sind beim Design solcher Mehrzweckgeräte für die gewünschten Messarten so viele Kompromisse zu schließen, dass am Ende die Leistungsfähigkeit der einzelnen Funktionen deutlich hinter der eines einzelnen Gerätes liegt.

Das Hauptproblem der unterschiedlichen Qualitäten der Funktionen eines Mehr-zweckgeräts liegt in den unterschiedlichen Anforderungen der Messtechnik begründet:
Für die Fluoreszenz ist die Abbildung der Probe auf den Detektor und die parallele Lichtführung durch die Filter essentiell, wobei Übersprecheffekte ("Crosstalk") wegen der lokalen Anregung nur in geringem Umfang auftreten. Auch die Effizienz der Lichtübertragung von der Probe zum Detektor (Emissionslichtpfad) spielt bei der Fluoreszenzmessung (im Gegensatz zur Lumineszenzmessung) nur eine untergeordnete Rolle, da die Fluorophore mit ausreichender Lichtmenge angeregt werden.

Bei der Lumineszenz (Bio- oder Chemilumineszenz) hingegen, bei der die Photonen durch eine chemische Reaktion erzeugt werden, ist deren Anzahl deutlich begrenzt. Diese Systeme müssen auf das 'Einsammeln' aller vorhandenen Photonen und auf das 'detektiert werden' optimiert werden. Diese Systeme bestehen normalerweise aus optischen Systemen, z.B. Lichtwellenleitern, die direkt an der Probe die Photonen aufnehmen und auf den Detektor weiterleiten.

Schwierigkeiten bestehen bei der "Time Resolved Fluoreszence" (TRF). Hier wird mit einem Lichtblitz angeregt, eine kurze Zeit gewartet und dann die 'zeitverzögerte Fluoreszenz' gemessen. Man regt also hochenergetisch an und misst dann nur noch die spezifische Fluroreszenz und keine Hintergrundfluoreszenz aus der Probe oder aus den verwendeten Materialien des optischen Pfades. Fast jedes Material, besonders Kunststoffe, hat eine Phosphoreszenz, die zum Hintergrundsignal beiträgt.

Zur Messung der oben genannten BRET ist ein Filter vor dem Detektor notwendig, wobei die meisten Hersteller ihre Fluorometer für BRET verwenden. Allerdings wird die Photonenemission durch eine chemische Reaktion ausgelöst (Lumineszenz) und daher sind nur eine geringe Anzahl von Photonen vorhanden. Die Empfindlichkeit von Fluorometern ist daher nicht ausreichend.

Der Anregungslichtpfad für die Fluoreszenzmessung beginnt mit einer Lichtquelle, z.B. einer Halogenlampe oder einer Xenon-Blitzlampe, durch geeignete optische Bauelemente wird das Licht in ausreichender Intensität und Positionsgenauigkeit zur Probe gebracht.

Im Anregungslichtpfad ist mindestens ein optischer Filter enthalten, so dass nur Anregungslicht in einem meist eng begrenzten Wellenlängenbereich auf die Probe fällt.

Im Emissionslichtpfad wird das in der Probe erzeugte Fluoreszenzlicht zum Detektor gebracht und dort gemessen. Dazwischen wird an geeigneter Stelle ein optischer Filter als Emissionsfilter positioniert.

Grundsätzlich kann man bei dieser Ausführung eines Fluoreszenzmesspfades die Anregungs-Lichtquelle abschalten und dann auch Lumineszenz messen. Ein gravierender Nachteil einer derartigen, in manchen Multilabelreadern eingesetzten Anordnung ist jedoch deren geringe Empfindlichkeit bei der Messung von Lumineszenz, da nur ein geringer Anteil der von der Probe emittierten Photonen auf die Linse im Emissionslichtpfad fällt und somit den Detektor erreichen kann. Eine derartige Anordnung ist etwa eine Größenordnung weniger empfindlich als bei einem gut konstruierten Luminometer.

### Stand der Technik

Aus der EP 0 803 724 A2 ist ein Mehrfachmessgerät bekannt, das die obengenannten Probleme nicht vermeidet, hauptsächlich, weil der dort für alle Messungen ausgelegte, verschiebbare Spiegelblock keine hocheffiziente Lichtführung zur Detektion schwacher Lumineszenzsignale ermöglicht. Der von der Linse erfasste Raumwinkel des von der Probe abgestrahlten Lichts ist klein, so dass nur ein geringer Teil der ursprünglich ausgesendeten Photonen zum Detektor gelangt. Außerdem ist bei dieser Anordnung das Übersprechen von Proben in benachbarten Probenbehältern der Mikroplatte hoch. Dies führt zu falschen Messergebnissen, wenn eine stark leuchtende Probe neben einer schwach leuchtenden Probe so stark strahlt, dass an der schwach leuchtenden Probe ein zu hoher Wert gemessen wird.

In der EP 1 279 946 A1 ist eine Anordnung beschrieben, welche unabhängige optische Emissionslichtpfade für die einzelnen Messverfahren, also insbesondere Fluoreszenz und Lumineszenz, vorsieht, um diese Nachteile zu vermeiden.

Der Emissionslichtpfad für Lumineszenzmessung besteht hierbei im wesentlichen aus einem Block parallel geführter und miteinander verklebter Einzel-Lichtleiter, der Anregungslichtpfad und der Emissionslichtpfad für Fluoreszenzmessung entspricht dem eingangs erläuterten. Das Licht im Anregungslichtpfad fällt bei dieser Optik als konvergenter Lichtstrahl auf die Probe.

Der Detektor und die Fluoreszenz-anregende Strahlungsquelle sind beweglich und werden motorisch in die für die jeweilige Messung benötigte Position gebracht. Die Messposition der Probenbehälter innerhalb des Gerätes für die verschiedenen Arten von Messungen ist daher nicht fix, sondern ist durch die Messtechnik vorgegehen

Wenn Reagenz-Injektion in die Messposition erforderlich ist, müssen unter Umständen an jedem optischen Pfad Injektionspositionen vorgesehen werden.

Mit dieser Anordnung erreicht man zwar gute Empfindlichkeitswerte, insbesondere für Lumineszenz, jedoch ist der konstruktive Aufwand gegenüber einer Ausführung mit nur einem einzigen optischen Emissionslichtpfad viel höher, insbesondere wenn man mehrere Pfade mit jeweils eigenen Injektoren versehen muss. Zusätzlicher Aufwand entsteht auch durch den Transportmechanismus für den Detektor, wobei die häufige Bewegung des hochempfindlichen Detektors auch das Risiko von Beschädigungen in sich trägt. Zudem muss in dieser Anordnung auch die Lichtquelle im Anregungslichtpfad verschiebbar sein.

In der US 6, 891, 681 B2 ist ein Messgerät beschrieben, bei dem über einen Lichtleiter das Anregungslicht durch eine Apertur in das Modul eingespeist wird und dort auf einen dichroischen Spiegel trifft, der das Licht über zwei ausserhalb des Moduls positionierte Linsen auf die Probe lenkt. Das in der Probe erzeugte Fluoreszenzlicht wird zurück über die beiden Linsen auf den dichroischen Spiegel gelenkt, durch welchen das längerwellige Licht hindurchtritt und auf einen dichroischen Strahlteiler gelangt. Dieser teilt das Licht in zwei Wellenlängenbereiche auf. Jeder der beiden so gebildeten Teilstrahlen verlässt das Modul durch je eine weitere Apertur, um schließlich über zwei Filter und entsprechende Linsen in zwei Detektoren getrennt gemessen zu werden.

Diese Optik hat zunächst den entscheidenden Nachteil, dass die beiden dichroischen Spiegel bzw. Strahlteiler nur durch entweder konvergente oder divergente Lichtstrahlen getroffen werden, während die beste Performance nur bei parallelem Lichteinfall erreicht wird.

Ein anderer wesentlicher Nachteil dieser Optik ist, dass sie nicht zur empfindlichen Messung von Chemilumineszenz geeignet ist. Für diesen Zweck wird ein optionaler Detektor benötigt, der das Licht über einen Lichtleiter direkt von der Probe empfängt. Auch dann ist es offensichtlich nicht möglich, Reagenzien in die Messposition zu injizieren. Ebenso wenig können in dieser Anordnung Chemilumineszmessungen mit Filtern, wie BRET oder Chroma-Glow, durchgeführt werden.

Die US 2007/0153368 A1 zeigt ein abbildendes Mikroskop, bei dem das vom beobachteten Objekt abgestrahlte Licht durch ein eine Reflexionskammer umschließendes Reflektorelement geführt ist. Die Reflexionskammer des Reflektorelements ist hierbei durch einen Abschnitt eines innen verspiegelten Rotationsparaboloids gebildet. Zur Durchführung von Fluoreszenz- Lumineszenz- oder Absorpionsmessungen ist das beschriebene Mikroskop nicht vorgesehen und geeignet.

Aus diesen Beispielen wird ersichtlich, dass die Anforderungen an ein Mehrfach-Messsystem, um optimal zu arbeiten, sehr vielfältig sind. Aus Gründen der Optik, der geometrischen Abmessungen, der Verfügbarkeit von Linsen mit speziellem Material und gewissen Brechungsindizes, mussten, wenn ein mehr oder weniger gemeinsamer optischer Pfad verwendet werden soll, Kompromisse eingegangen werden, die zu einer hinsichtlich Spezialgeräten reduzierten Leistungsfähigkeit führen, oder es musste ein erhöhter Aufwand zur Etablierung individueller, für die jeweilige Messmethode optimierter Messlichtpfade getrieben werden.

### Darstellung der Erfindung

Es ist Aufgabe der Erfindung, mit nur einem gemeinsamen (Emissions-)Lichtpfad sowohl für Fluoreszenz als auch für Lumineszenz mindestens die gleiche Empfindlichkeit zu erreichen wie mit spezialisierten Fluorometern und Luminometern.

Diese Aufgabe wird erfindungsgemäß mit den Merkmalen des Schutzanspruchs 1 gelöst.

Der Grundgedanke der Erfindung ist darin zu sehen, dass die optische Ankopplung des Probenbehälters an den Detektor über ein erstes Reflektorelement mit einer innen verspiegelten Oberfläche erfolgt, das eine Reflexionskammer bildet, die eine Ausrichtung des aus der Oberfläche des Probenbehälters austretenden Lichts bewirkt. Diese Bündelung kann in Abhängigkeit vom verwendeten Wellenlängenselektor eine im wesentlichen parallele Ausrichtung der emittierten Photonen sein, aber auch eine Konvergenzwirkung dergestalt beinhalten, dass eine Konzentrierung der Photonen auf einen definierten Flächenbereich in der Ebene des Wellenlängenselektor erfolgt.

Wesentlichen Vorteile des gemeinsamen Emissionslichtpfades bestehen darin, dass ein einziger stationärer Detektor für Fluoreszenz- und Lumineszenzmessungen und eine stationäre Lichtquelle verwendet werden können.

Der Wellenlängenselektor wird von einem Emissionsfilter gebildet. In diesem Fall ist die verspiegelte Innenfläche der Reflexionskammer in Form eines Stumpfes eines Rotationsparaboloids ausgeführt. Dessen Brennpunkt liegt innerhalb oder in der nahen Umgebung des Probenbehälters.

Dadurch wird erreicht, dass das aus dem Probenbehälter emittierte Licht weitgehend parallel die Reflexionskammer verlässt und senkrecht auf den Emissionsfilter trifft. Dies ist vorteilhaft, weil die Filterwirkung insbesondere von Interferenzfiltern bei senkrechtem strahlendurchgang am besten ist

Der Paraboloidabschnitt kann in der Praxis auch durch aufeinandergesetzte Kegelstumpfabschnitte angenähert werden.

Der Anregungslichtpfad enthält ein Reflektorelement in Form eines Umlenkspiegels, der das Anregungslicht im Wesentlichen senkrecht auf die Oberfläche der Probe wirft.

Dieser Umlenkspiegel wiederum ist in einem lichtdichten Rohr gehalten, in dem das Anregungslicht im Anregungslichtpfad geführt wird. Der Umlenkspiegel befindet sich auf einer lichtdichten Unterlage und unterteillt das lichtdichte Rohr in zwei Abschnitte, einen horizontalen Abschnitt zur Einführung des Anregungslichts in die Reflexionskammer bis zum Umlenkspiegel, und einen an den Umlenkspiegel anschliessenden vertikalen Abschnitt zur Weiterleitung des umgelenkten Anregungslichts zum Probenbehälter.

Die durchgehend lichtdicht ausgebildete Führung des Anregungslichts im Reflexionsraum verhindert, dass Anregungslicht unmittelbar zum Detektor gelangen kann und dort zu Verfälschungen der Messung führt.

Eine vorteilhafte Ausgestaltung sieht aus demselben Grund vor, dass die Bauteile zur Führung des Anregungslichts im Reflexionsraum auf ihrer Außenseite lichtabsorbierend ausgeführt sind.

Im Strahlengang des Anregungslichtpfads ist eine Fokussierlinse angeordnet, deren Brennpunkt derart gewählt ist, dass er vorzugsweise unterhalb des Brennpunkts des Paraboloids liegt; überraschenderweise lässt sich mit dieser Konstellation eine Maximierung der Lichtausbeute erzielen.

Eine weitere vorteilhafte Ausgestaltung betrifft die konstruktive Ausbildung der Führung des Emissionslichts. Hier ist zwischen dem Emissionsfilter und dem Detektor eine Absorptionsfläche in Form eines Hohlzylinders vorgesehen, durch den sich eine Eliminierung von unerwünschten Anteilen des Emissionslichtstrahls erreichen lässt, die den Detektor nicht erreichen sollen.

Durch geeignete Wahl der Dimensionierung des Paraboloidabschnitts (oder der entsprechenden Kegelstümpfe) und der lichtführenden Bauteile im Bereich der Reflexionskammer kann eine Optimierung der erfindungsgemässen Messvorrichtung hinsichtlich des Einsatzes als Mehrfachmessgerät soweit erreicht werden, dass sich eine im Vergleich zur Messung der Fluoreszenz im Lumineszenzlichtpfad des genannten Geräts etwa 10-fach erhöhte Nachweisempfindlichkeit für Lumineszenz gegenüber dem Mehrfachmessgerät nach der EP 1 279 946 A1 erzielen lässt.

Auch für Fluoreszenz wird eine Signalstärke gemessen, die wegen der hohen optischen Effizienz im Emissionslichtpfad etwa zehnmal grösser als bei dem genannten Gerät ist. Allerdings steigt auch der Nulleffekt, so dass die Nachweisempfindlichkeit z.B. für FITC Messungen, wie sie sich aus dem 3-Sigma-Kriterium ergibt, effektiv noch über 100% höher liegt

Bei speziellen Abwandlungen der Fluoreszenz-Messtechnik, wie sie weiter unten beschrieben werden, kommt die mit der erfindungsgemässen Vorrichtung erzielbare hohe optische Effizienz des Emissionslichtpfades stärker zum Tragen.

Bei BRET-Messungen erreicht man durch den bei der erfindungsgemässen Vorrichtung implizierten parallelen Einfall des Emissionslichts auf das Emissionsfilter eine gute spektrale Trennung. Ausserdem wird infolge dieser Parallelisierung des Emissionslichts der Einsatz einer Linse überflüssig.

Wegen der hohen optischen Effizienz der Reflexionskammer kann auch Chemilumineszenz mit derselben Optik und demselben Detektor wie bei der Fluoreszenz gemessen werden, und zwar mit höchster Empfindlichkeit.

Injektion von Reagenzien in die Messposition ist möglich, außerdem können wellenlängenabhängige Chemilumineszenzmessungen durch Einbringen von Filtern in den optischen Pfad erfolgen.

Da die Reflexionskammer des ersten Reflektorelements paraboloidförmig ausgestaltet ist, wodurch das Licht, welches aus der Reflexionskammer austritt, im wesentlichen parallel gerichtet ist, weist eine weitere bevorzugte Ausführungsform der Erfindung zwischen Austrittsöffnung des Reflektorelements und Eintrittsfenster des Detektors einen Abstandshalter derart auf, dass zwischen die Austrittsöffnung des Reflektorelements und das Eintrittsfensters des Detektors Module mit unterschiedlichen optischen Eigenschaften einsetzbar sind. Hierdurch wird ein modularer Aufbau erreicht, welcher im Laboreinsatz ein rationelles Arbeiten erleichtert.

Insbesondere zur Messung von BRET, FRET oder TR-FRET kann es vorteilhaft sein, mit zwei Detektoren bei Verwendung unterschiedlicher Emissionsfilter die Lichtintensität in zwei Wellenlängenbereichen gleichzeitig zu messen. In einer weiteren bevorzugten Ausführungsform sind deshalb oberhalb des Reflektorelements zwei Detektoren vorgesehen, deren optische Achsen (das sind die Flächennormalen der Eintrittsfenster) schräg bezüglich der Oberflächen der sich in den Probenbehältern befindenden flüssigen Proben stehen. Hierdurch ergibt sich eine Reflexionskammer mit zwei Abschnitten, welche als Teilreflexionskammern bezeichnet werden können. Diese Teilreflexionskammern sind bevorzugt paraboloidförmig.

Weitere bevorzugte Ausführungsformen ergeben sich aus den weiteren Unteransprüchen sowie aus den nun mit Bezug auf die Figuren näher erläuterten Ausführungsbeispielen.

### Kurze Beschreibung der Fiauren

Ausführungsbeispiele der erfindungsgemässen Messvorrichtung werden anhand von Zeichnungen näher erläutert, es zeigen:
- Figur 1:: eine perspektivische Schnittdarstellung der Messvorrichtung,
- Figur 2:: eine perspektivische Gesamtdarstellung der Messvorrichtung nach Figur 1 ohne Probenbehälter, mit Injektionsvorrichtung und Lasermodul,
- Figur 3:: eine schematische Darstellung des Anregungslichtpfades bei Fluoreszenzmessungen,
- Figur 4:: eine Darstellung der Zuordnung der optischen Verhältnisse der beiden Reflektorelemente,
- Figur 5:: eine perspektivische Schnittdarstellung der Führungsbauteile des Anregungslichtes in der Reflexionskammer,
- Figur 6:: schematische Darstellungen von Lichtstrahlen des Emissionslichtpfads in der Reflexionskammer,
- Figuren 7,8:: Schnittdarstellungen durch die Messvorrichtung mit Injektionselement für Lumineszenzmessung und Lasermodul,
- Figur 9:: eine schematische Darstellung einer Ausgestaltung der Messvorrichtung für Fluoreszenz-Polarisationsmessungen,
- Fig.10:: eine Teilschnittdarstellung einer Ausgestaltung der Messvorrichtung für Fluoreszenzmessungen von unten, und
- Fig.11:: eine Schnittdarstellung einer Messvorrichtung mit mehreren Modulen,
- Fig.12:: ein erstes Modul in einer Schnittdarstellung,
- Fig.13:: ein zweites Modul in einer Schnittdarstellung,
- Fig.14:: einen Lichtleiter und einen Monochromator im Emissionslichtpfad und
- Fig.15:: eine weitere Ausführungsform der Erfindung in einer Schnittdarstellung.

### Beschreibung der bevorzugten Ausführungsbeispiele

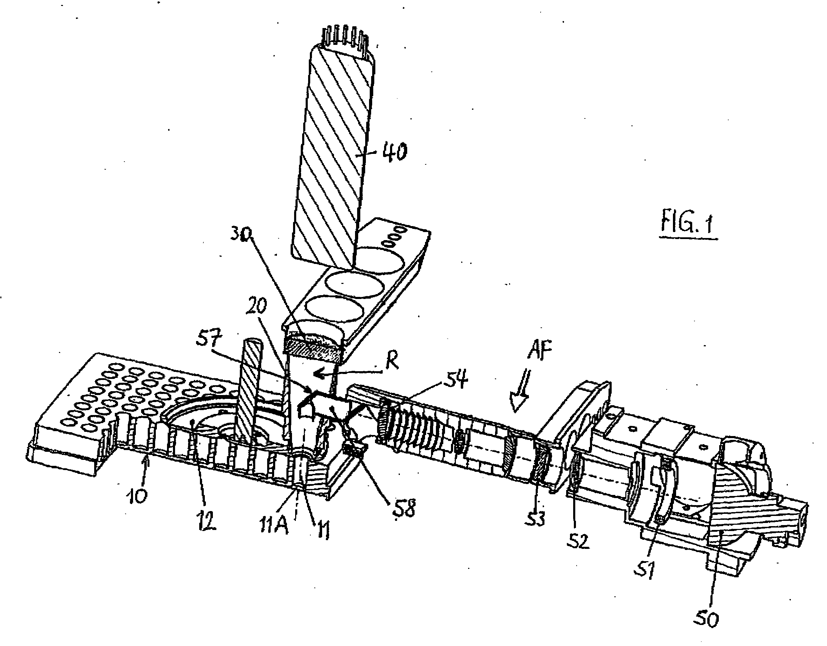

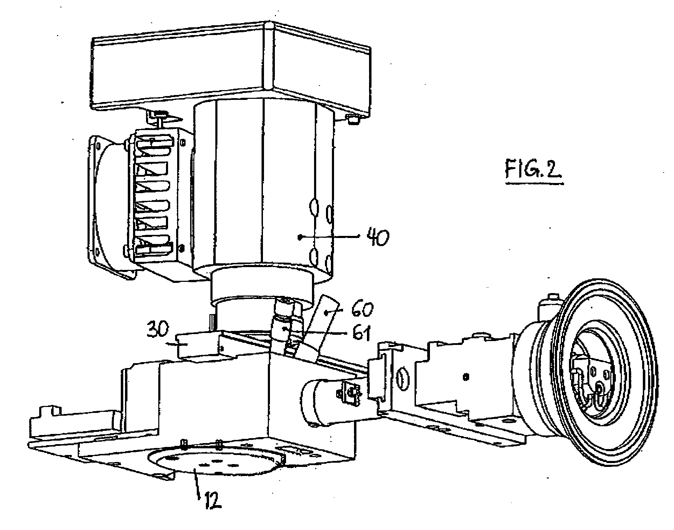

Die Figuren 1 und 2 zeigen den konstruktiven Aufbau der Messvorrichtung, Figur 1 mit Mikrotiterplatte 10, Figur 2 ohne Mikrotiterplatte mit einem Injektionselement und einem Lasermodul. Die wesentlichen Bauelemente sind folgende:
Oberhalb der Mikrotiterplatte 10 mit ihren Probenbehältern 11 befindet sich ein erstes Reflektorelement 20, dessen Aufbau im Einzelnen weiter unten noch erläutert wird. Die obere Öffnung dieses ersten Reflektorelements 20 reicht bis zu einem Emissionsfilter 30, über dem in an sich bekannter Weise ein Detektor 40 zur Erfassung der aus dem Probenbehälter austretenden Photonen angeordnet ist. Vom Probenbehälter 11 zum Detektor 40 führt somit der Emissionslichtpfad EF der von der im Probenbehälter 11 befindlichen Probe (nicht dargestellt) durch Fluoreszenz- oder Lumineszenz erzeugten Emissionsstrahlung.

Zwischen dem ersten Reflektorelement 20 und der Mikrotiterplatte 10 ist ein Blendenrad 12 gehalten, dessen Aufbau im wesentlichen der eingangs erwähnten EP 1 279 964 A1 entspricht und daher nicht näher erläutert wird.

Zur Messung von Fluoreszenz beinhaltet ein Anregungslichtpfad AF zunächst in an sich bekannter Weise eine Lichtquelle 50, eine Blende 51, eine Linse 52 und ein Anregungsfilter 53. Diese Bauteile und deren Peripherie werden hier nicht näher erläutert.

Das Anregungslicht gelangt in ein Rohr 58, das in eine vom ersten Reflektorelement 20 gebildete Reflexionskammer R geführt ist, und wird dort so umgeleitet, dass es im wesentlichen senkrecht auf die Oberfläche der im Probenbehälter 11 befindlichen Probe auftrifft. Diesem Zweck dient ein zweites Reflektorelement, das im Rohr 58 gehalten ist, die Ausgestaltung dieses Bereichs wird weiter unten noch näher erläutert.

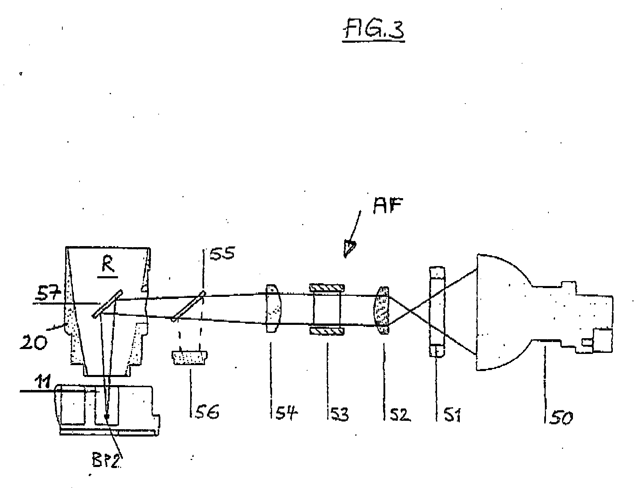

In Figur 3 ist der Strahlengang im Anregungslichtpfad AF mit den ihn erzeugenden optischen Bauelementen schematisch dargestellt, wobei hier zusätzlich noch eine Referenzeinheit, bestehend aus Glasscheibe 55 und Referenzdetektor 56 dargestellt ist, die zur Regelung der Lichtintensität dient.

Eine Fokussierlinse 54 erzeugt aus dem durch die vorhergehenden optischen Elemente parallelisierten Lichtstrahl der Lichtquelle 50 einen schwach konvergenten Lichtstrahl. Hierbei ist die fokussierende Wirkung der Fokussierlinse 54 so bemessen, dass nach Umlenkung des Lichtstrahls durch das zweite Reflektorelement der Brennpunkt BP2 des Anregungslichtstrahles im Probenbehälter 11 zu liegen kommt. Wegen der endlichen Ausdehnung der Lichtquelle 50 und unvermeidlicher Toleranzen der weiteren optischen Bauteile im Anregungslichtpfad AF ist ein mathematisch exakter Brennpunkt nicht zu realisieren. Die Fluoreszenzanregung erfolgt folglich in dem vom Anregungslicht durchmessenen Volumenbereich der im Probenbehälter 11 befindlichen Probe.

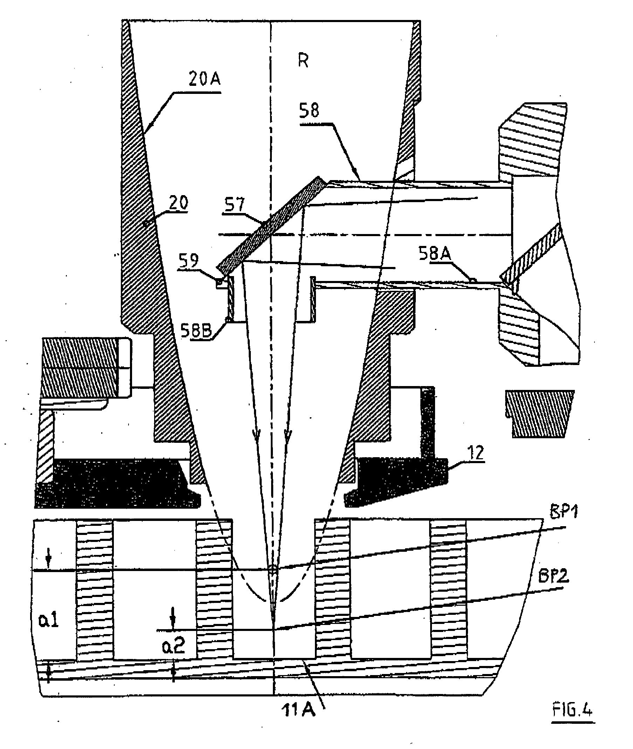

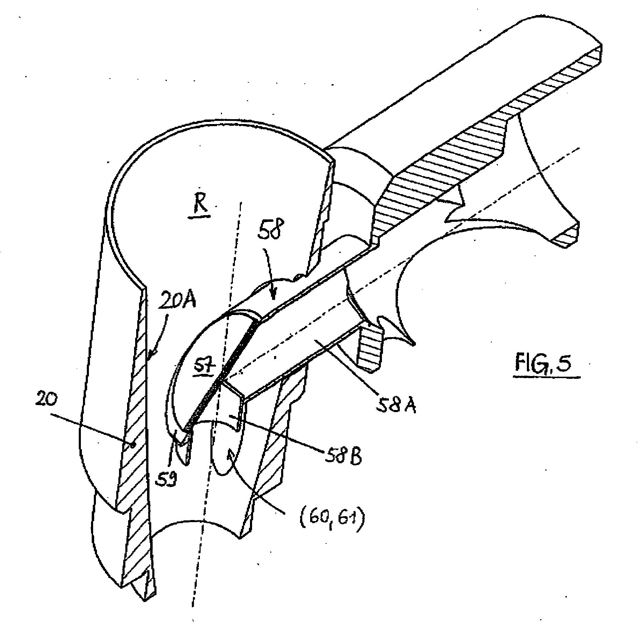

Die erfindungscharakteristischen Bauteile dieser Messvorrichtung, die Reflektorelemente und deren Aufbau und Zuordnung, sind in den Figuren 4 und 5 dargestellt:
Das erste Reflektorelement 20 besteht aus einen rotationssymmetrischen, zwischen Probenbehälter 11 und Emissionsfilter 30 angeordnetem Bauteil mit einem durchgehenden Kanal. Die Innenwandung 20A dieses Kanals ist verspiegelt und weist die Form eines Stumpfes eines Rotationsparaboloids auf, dessen Schnittkurve der Parabel-Gleichung y = n mal x² genügt. Die Fortsetzung dieser Schnittkurve zur "vollständigen" Parabel ist in Figur 4 gestrichelt dargestellt. Diese Innenwandung 20A bildet die Reflexionskammer R. In der Praxis weist der Faktor n der Parabel-Gleichung Werte zwischen 3 und 5 auf.

Der Brennpunkt BP1 dieser Parabel und damit der verspiegelten Innenwandung 20A des ersten Reflektorelements 20 liegt unterhalb der unteren Öffnung des Reflektorelements 20 in einem Abstand a1 zum Boden 11A des Probenbehälters 11. Photonen, die im Bereich des Brennpunkts BP1 aus der Probe emittiert werden, werden daher (sofern sie die Innenwandung 20A erreichen) in der Reflexionskammer R parallel gerichtet und gelangen somit im wesentlichen senkrecht auf die Oberfläche des Emissionsfilters 30.

Das zur Einführung des Anregungslichtes im Anregungslichtpfad AF (Figur 5) dienende Rohr 58 besteht aus einem ersten, horizontalen Abschnitt 58A und einem an diesen knieförmig anschließenden, zweiten Abschnitt 58B, dessen Längsachse koaxial zur Längsachse des Probenbehälters 11 liegt.

Als zweites Reflektorelement dient ein planer Spiegel 57, der unter einem Winkel von jeweils 45° zur Längsachse des horizontalen/vertikalen Rohrabschnittes 58A,58B liegt, so dass das Anregungslicht vom ersten Rohrabschnitt 58A in den zweiten Rohrabschnitt 58B gespiegelt wird. Die dargestellte elliptische Form des Spiegels 57 entspricht dem Durchmesser der Rohrabschnitte und dem Winkel 45°, so dass sich dem Anregungslicht ein kreisförmiger Spiegelquerschnitt präsentiert.

Wie oben erwähnt, bewirkt die Fokussierlinse 54 eine Konvergenz des Anregungslichtstrahles derart, dass ein zweiter Brennpunkt BP2 gebildet wird, der in einem zweiten Abstand a2 zum Boden 11A des Probenbehälters 11 zu liegen kommt, ebenfalls innerhalb der dort befindlichen Probe.

Die Differenz der Abstände a1 und a2 liegt bei der Verwendung handelsüblicher Mikrotiterplatten 10 und den darin eingebrachten Probengefäßen 11 in der Größenordnung von etwa 2 mm.

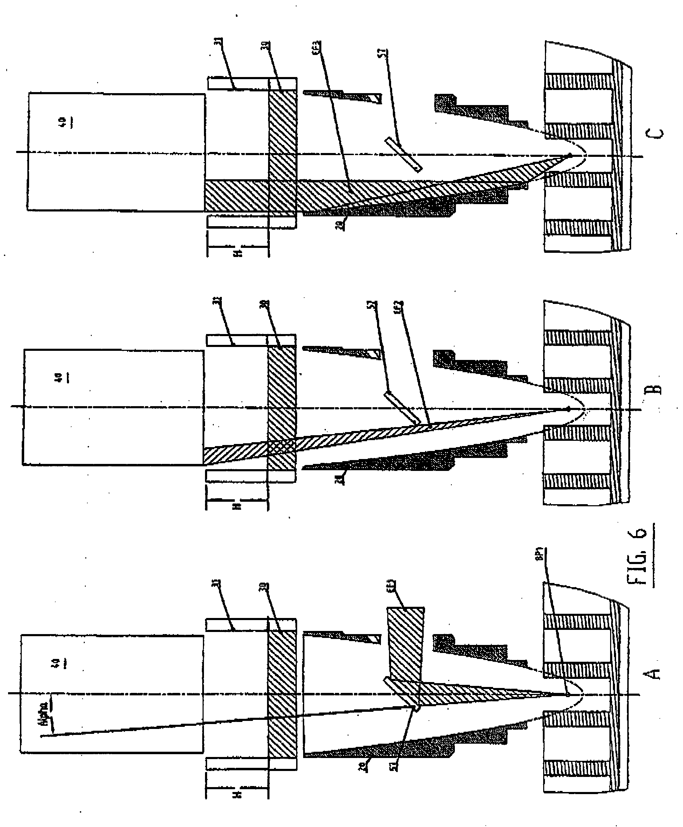

Mit den geschilderten mechanischen und optischen Vorkehrungen ergibt sich ein Emissionslichtpfad EF, dessen Bestandteile in Figur 6 dargestellt sind, wobei vereinfachend einfachend davon ausgegangen wird, dass das Emissionslicht vom Brennpunkt BP1 ausgeht:
Ein erster Anteil EF1 (Figur 6A) des Emissionslichtes scheidet für die Messung im Detektor 40 aus. Hierzu gehören Strahlen, die auf den Spiegel 57 treffen und in den Anregungslichtpfad AF zurückgeworfen werden, zu diesem Anteil gehören aber auch Strahlen, die auf das Rohr 58 und die Halterung 59 des Spiegels 57 auftreffen und ebenfalls den Detektor 40 nicht erreichen können, da diese Bauteile zur Verhinderung von Streulicht auf ihrer Außenseite lichtabsorbierend ausgeführt sind.

Ein zweiter Teil EF2 (Figur 6B) des Emissionslichts passiert einerseits Rohr 58 und Halterung 59, andererseits aber auch die Innenwandung 20A des Paraboloidabschnitts 20, und fällt somit direkt unter einem durch die Größe dieser Bauelemente und deren Abstand zueinander definierbaren Winkel auf den Emissionsfilter 30 (Figur 6B). Bei der dargestellten bevorzugten Ausführungsform bilden etwa 10% des Emissionslichtes diesen zweiten Anteil EF2.

Will man vermeiden, dass der zweite Anteil EF2 des Emissionslichtes den Detektor erreicht, so kann man oberhalb des Emissionsfilters 30 ein Absorptionselement in Form eines Hohlzylinders 31 mit einer Höhe H zwischen dem Austrittsquerschnitt des Emissionsfilters 30 und dem Eintrittsquerschnitt des Detektors 40 anordnen, dessen Innenseite Licht absorbierend (z.B. durch einen Überzug aus schwarzem Filz) ausgeführt ist. Alternativ kann auch der Durchmesser des Rohrabschnitts 58B entsprechend grösser ausgeführt werden.

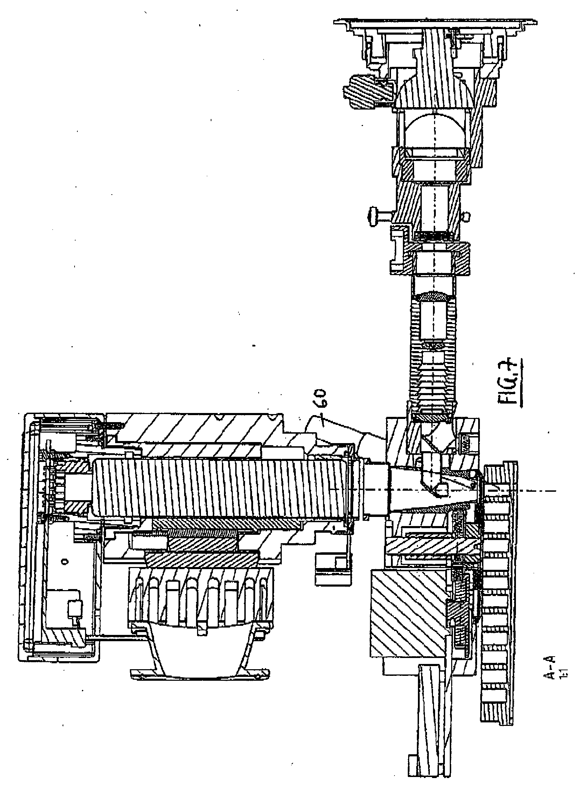

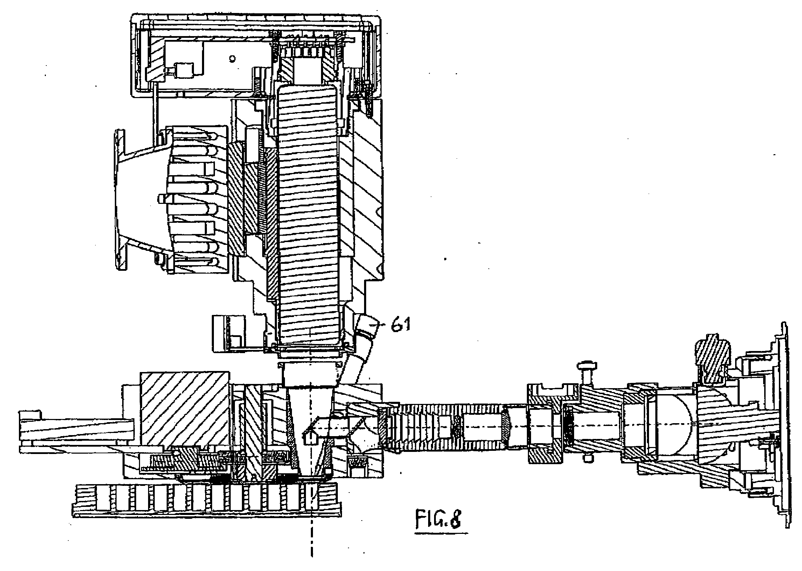

Ein dritter Aneil EF3 (Figur 6C) des Emissionslichtes schließlich fällt auf die Innenwandung 20A des Rotationsparaboloids 20 und wird demzufolge (je nach seiner "Herkunft" aus dem Bereich des Brennpunkts BP1) mehr oder weniger genau parallelisiert und senkrecht auf das Emissionsfilter 30 geworfen; dieser Anteil macht etwa 90% des auf den Emissionsfilter 30 fallenden Emissionslichtes aus. Ein Lasermodul 60 und ein Injektionselement 61 sind in die Reflexionskammer R geführt und zielen in den Probenbehälter 11 (Figuren 7 und 8).

Werden die optischen Bauteile des Anregungslichtpfads AF durch das Lasermodul 60 ersetzt, kann sog. Alpha-Screen durchgeführt werden, bei dem das Licht des Lasers unmittelbar oder über einen Lichtleiter, der sich innerhalb eines Führungsrohres befindet, auf die Probe gebracht wird. Die Bestrahlung erfolgt jeweils für eine kurze Zeit, dann wird die Lichtquelle abgeschaltet und unmittelbar danach das aus der Probe emittierte Licht gemessen.

Das Injektionselement 61 erlaubt Lumineszenzmessungen, bei denen die Injektion von Reagentien in der Messposition erfolgen muss.

Anstelle eines Lasermoduls kann wahlweise auch ein weiteres Injektionselement vorgesehen sein.

Ohne weitere Ausgestaltungen können unter Erzielung der beschriebenen Vorteile mit der erfindungsgemässen Messvorrichtung folgende Messverfahren durchgeführt werden:
Das FRET - Verfahren unterscheidet sich von der Standard-Fluoreszenzmessung dadurch, dass dieselbe Probe bei zwei unterschiedlichen Emissions-Wellenlängenbereichen gemessen wird.
Beim TRF- Verfahren wird zur Anregung eine gepulste Lichtquelle, üblicherweise eine Xenon-Blitzlampe, verwendet. Für jede Messung erfolgt eine Serie von Blitzen, nach jedem Blitz wird nach einer anfänglichen Zeitverzögerung in einem bestimmten Zeitfenster die Emissionsstrahlung gemessen. Hierdurch werden Störsignale durch Fluoreszenz mit kürzerer Abklingzeit, als sie die bei TRF verwendeten Markierungen haben, ausgeschaltet.

Das TR-FRET-Verfahren ist eine Kombination aus FRET und TRF derart, dass bei jeder Probe TRF bei zwei verschiedenen Emissions-Wellenlängen gemessen wird.

Zur Messung der Absorption befindet sich unter dem transparenten Boden eines Probenbehälters eine Fotodiode. Damit wird in bekannter Weise die Schwächung des durch den Anregungslichtptad kommenden Lichts beim vertikalen Durchtritt durch die Probe gemessen.

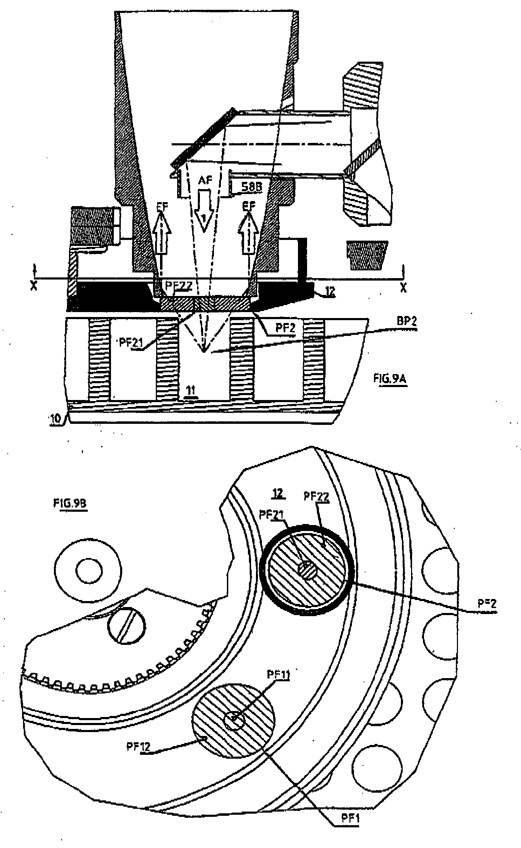

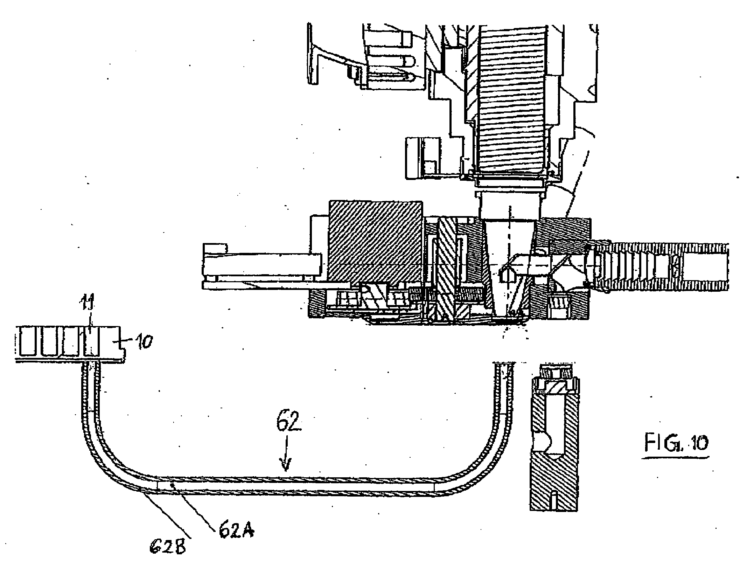

Weitere Anwendungen und Ausbildungen der Erfindung werden nun anhand der Figuren 9 und 10 erläutert:

Bei Fluoreszenz-Polarisation wird die Probe von der Lichtquelle mit polarisiertem Licht bestrahlt (Anregungslichtpfad), im Emissionslichtpfad werden die Anteile bestimmt, die einerseits parallel, andererseits senkrecht zur Polarisationsrichtung des eingestrahlten Lichts der Lichtquelle polarisiert sind.

Dazu dient die in Figur 9 schematisch dargestellte Ausbildung der erfindungsgemässen Messvorrichtung:

Unmittelbar über der Probe befindet sich eine von zwei Polarisationsfilteranordnungen PF1, PF2, die nacheinander über die Probe positioniert und in Bezug auf die optische Achse des Emissionslichtpfades EP zentriert werden.

Die Polarisationsfilteranordnungen PF1,PF2 sind beim dargestellten Ausführungsbeispiel konstruktiv auf demselben Blendenrad 12 untergebracht, auf dem sich auch die verschiedenen Blendenöffnungen befinden.

In jeder dieser beiden Polarisationsfilteranordnungen PF1, PF2 befindet sich jeweils in der Mitte ein erstes, kreisförmiges Polarisationsfilter PF11,PF21, umgeben von einem zweiten, ringförmigen Polarisationsfilter PF12,PF22.

Bei der ersten Filteranordnung PF1 ist die Polarisationsrichtung der beiden Polarisationsfilter PF11,PF12 im inneren Kreis- und äußeren Ring-Bereich parallel, bei der zweiten Filteranordnung PF2 ist die Polarisationsrichtung der beiden Polarisationsfilter PF21,PF22 senkrecht zueinander (die Schraffur in Figur 9B stellt die Polarisationsrichtungen dar).

Bei der in Figur 9A gezeigten Position des Blendenrads 12 befindet sich die zweite Polarisationsfilteranordnung PF2 im Strahlengang.

Eine Anpassung der Dimensionierung der oben beschriebenen optischen Bauteile im Anregungslichtpfad AF an den Durchmesser der ersten Polarisationsfilter PF11, PF21 ist so vorgenommen, dass die Anregungsstrahlung (Pfeil nach unten) nur durch den ersten Polarisationsfilter PF11,PF21 in die Probe eintritt, und dass im Emissionslichtpfad EP vom austretenden Emissionslicht nur derjenige Teil gemessen wird (Pfeile nach oben), der durch den zweiten Polarisationsfilter PF12,PF22 austritt. Letzteres wird auch durch die vom vertikalen Abschnitt 58B des Rohres 58 bewirkte Abschirmung erreicht, welche die unerwünschte, durch die ersten Polarisationsfiilter PF11,PF21 austretende Strahlung am Erreichen des Emissionsfilters 30 und Detektors 40 hindert.

Zur Messung einer Probe werden nacheinander die beiden Polarisationsfilteranordnungen PF1,PF2 in die Messposition über die Probe gebracht, das Verhältnis der dabei gemessenen Intensitäten ergibt ein Maß für die Polarisation bzw. Depolarisation.

Eine weitere vorteilhafte Ausgestaltung der erfindungsgemässen Vorrichtung (Figur 10) dient zur Durchführung von Fluoreszenzmessungen von unten, die bei manchen Proben, z.B. Zellen, die am Boden einer Mikroplatte haften, durch den transparenten Boden einer Mikroplatte 10 hindurch erfolgt.

Der Anregungslichtpfad AP entspricht dem oben für Fluoreszenzmessungen erläuterten, jedoch trifft hier das Licht nicht direkt auf die Probe, sondern tritt zunächst in einen Lichtleiter 62 ein.

Der Lichtleiter 62 besteht aus einem inneren Lichtleiterbündel 62A, das die Fortsetzung des Anregungslichtpfads AF zum Probenbehälter 11 darstellt, und einem dieses umgebende äusseren Lichtleiterbündel 62B.

Vom Austrittsende des Lichtleiterbündels 62A wird das Licht von unten in den Probenbehälter 11 gestrahlt. Das in der Probe entstehende Fluoreszenzlicht tritt, soweit es nach unten gerichtet ist, in den Lichtleiter 62 ein und durchläuft dann die Reflektionskammer 20, um schließlich auf den Emissionsfilter 30 und den Detektor 40 zu treffen.

Bei dieser Anordnung ist die Probe gegenüber der optischen Achse des Emissionslichtpfads EP in der Reflexionskammer R seitlich versetzt.

Der Lichtleiter 62 kann motorisch in eine nicht-aktive Position gebracht werden, um für eine Standard-Fluoreszenzmessung einer Mikroplatte von oben Platz zu machen.

Eine weitere Ausgestaltung der Erfindung betrifft den Bereich zwischen der oberen Austrittsöffnung des ersten Reflektorelements, welches z. B. als Rotationsparaboloid realisiert sein kann, und dem Detektor.

Es wurde bereits dargelegt, dass ein als EF2 bezeichneter Teil des Emissionslichtes (Fig. 6B) nicht in der erwünschten Weise parallel auf den Emissionsfilter fällt. Um diesen Anteil auszuschalten, der bei Fluoreszenzmessungen zu einer Erhöhung der Störsignale führt, kann wie bereits ausgeführt, zwischen Emissionsflter und Detektor ein Absorptionselement in Form eines Hohlzylinders, dessen Innenflächen lichtabsorbierend ausgeführt wird, angeordnet werden. Diese Anordnung ist allerdings nur bei Fluoreszenzmessungen vorteilhaft, während bei Messungen der Bio- und Chemilumineszenz der Strahlungsanteil EF2 zur Nutzstrahlung gehört und daher nicht absorbiert werden soll.

Bei bestimmten Formen der Fluoreszenzmessung, insbesondere TR-FRET, hat es sich als vorteilhaft erwiesen, oberhalb des Emissionsfilters eine Linse anzuordnen, welche das Emissionslicht auf den Detektor hin konvergierend leitet und unter Umständen auf den Bereich der Detektoreintrittsfläche fokussiert. Je nach Messaufgabe werden dann noch verschiedene Eintrittsblenden vor den Detektor platziert. Erfindungsgemäß befinden sich zwischen der oberen Austrittsöffnung des ersten Reflektors und dem Detektor austauschbare Module, die je nach Messaufgabe in den optischen Pfad gebracht werden.

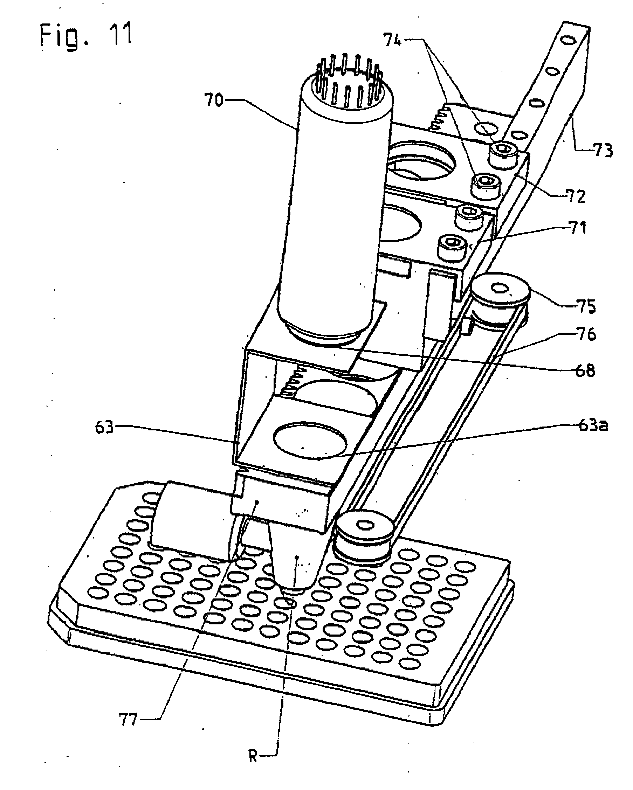

Eine bevorzugte Ausführungsform zeigt Abb. 11. In einem liegenden U-Bügel sind zwei Öffnungen. Die erste Öffnung 63a erlaubt den Eintritt des Lichtes aus der Reflexionskammer R, die andere ist die Austrittsöffnung 68 zum Detektor 70. In den durch den U-Bügel umgrenzten Raum wird das jeweils ausgewählte Modul positioniert. Die einzelnen Module, z. B. 71 und 72, sind auf einer Trägerschiene 73 montiert, wo sie mit zwei Schrauben 74 fixiert sind. Die Schiene mit den daran befestigten Modulen ist ihrerseits an einer (nicht abgebildeten) Linearführung fixiert. Durch einen Motor (nicht abgebildet) wird über ein Antriebsrad 75 ein Zahnriemen 76 bewegt, an den die Trägerschiene angekoppelt ist. Zwischen der Austrittsöffnung aus der Reflexionskammer und der Eintrittsöffnung in den U-Bügel befindet sich der Filterschieber 77.

Die Trägerschiene ist so ausgerichtet, dass jedes daran montierte Modul in die erforderliche Position im Emissionslichtpfad gebracht werden kann. Die Trägerschiene kann mit Hilfe ihres Antriebs die Module nach Öffnen einer lichtdichten Türklappe aus dem Gerät herausfahren, so dass der Benutzer die Modulbestükkung ändern oder überprüfen kann. Zur Identifikation der Module können diese mit einem Barcode-Label oder einem Radio-Frequency-Identification (RFID) Modul versehen sein.

Im einfachsten Falle ist das Gerät mit nur einem optischen Modul bestückt.

Die Module und der Transportmechanismus sind so konstruiert, dass unterschiedliche Module schnell, d. h. in weniger als 0, 5 Sekunden in den Emissionslichtpfad gebracht werden können. Dies erlaubt, dass dieselbe Probe, bzw. dieselbe Mikroplatte mit verschiedenen optischen Verfahren gemessen werden kann.

Alle Module haben gleiche Außenabmessungen und die äußere Form von Quadern, wozu noch identische Teile zum Befestigen der Module an der Schiene kommen, so dass sie leicht ausgetauscht werden können. Im Folgenden wird der Aufbau einzelner Module im Detail beschrieben.

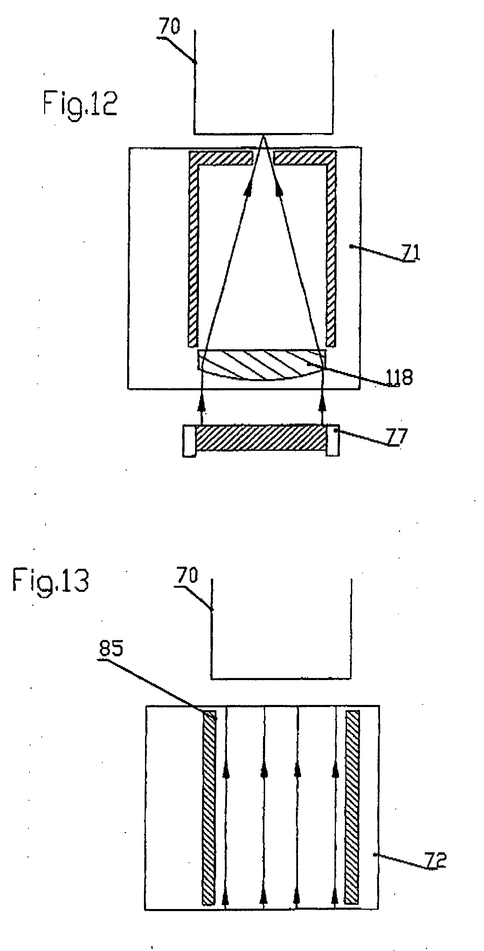

Fig. 12 zeigt ein Modul zur Messung sowohl der prompten als auch der zeitaufgelösten Fluoreszenz. Dazu wird im Filterschieber 77 ein geeigneter Filter ausgewählt. Eine im Modul befindliche Linke fokussiert das Licht auf den empfindlichen Teil des Detektors.

Es hat sich gezeigt, dass der optimale Durchmesser der Blende vor dem Detektor je nach Anwendung verschieden ist. Daher werden verschiedene Module mit jeweils unterschiedlichen Blendenformen vorgesehen.

Fig. 13 zeigt ein Modul zur Standard-Lumineszenzmessung ohne Filter und enthält nur ein innen verspiegeltes Rohrstück 85, so dass möglichst viel Licht in Richtung zum Detektor transportiert wird.

Solange der optische Teil der einzelnen Module im wesentlichen unverändert bleibt, können als kostengünstige Alternative die unterschiedlichen optischen Konstruktionen die als Zwischenoptik bezeichnet werden sollen, auch in einem einzigen, also nicht-modularen Schieber oder Rad untergebracht werden. Dieser Schieber läuft oberhalb des Filter'schiebers und erlaubt eine beliebige Kombination von optischem Filter und Zwischenoptik.

Der erfindungsgemäße Geräteaufbau mit Modulen unterscheidet sich in wesentlichen Aspekten von anderen bekannten Konzepten:
In der US 6, 891, 681 B2 wird entsprechend Fig 2 über einen Lichtleiter das Anregungslicht durch eine Apertur in das Modul eingespeist und trifft auf einen dichroischen Spiegel, der das Licht über zwei ausserhalb des Moduls positionierte Linsen auf die Probe lenkt. Das in der Probe erzeugte Fluoreszenzlicht wird zurück über die beiden Linsen auf den dichroischen Spiegel gelenkt, durch welchen das längerwellige Licht hindurchtritt und auf einen dichroischen Strahlteiler gelangt. Dieser teilt das Licht in zwei Wellenlängenbereiche auf. Jeder der beiden so gebildeten Teilstrahlen verlässt das Modul durch je eine weitere Apertur, um schließlich über zwei Filter und entsprechende Linsen in zwei Detektoren getrennt gemessen zu werden.

Diese Optik hat zunächst den entscheidenden Nachteil, dass die beiden dichroischen Spiegel bzw. Strahlteiler nur durch entweder konvergente oder divergente Lichtstrahlen getroffen werden, während die beste Performance nur bei parallelem Lichteinfall erreicht wird.

Ein anderer wesentlicher Nachteil dieser Optik ist, dass sie nicht zur empfindlichen Messung von Chemilumineszenz geeignet ist. Für diesen Zweck wird ein optionaler Detektor 323c, 331 c benötigt, der das Licht über einen Lichtleiter direkt von der Probe empfängt. Auch dann ist es offensichtlich nicht möglich, Reagenzien in die Messposition zu injizieren. Ebenso wenig können in dieser Anordnung Chemilumineszmessungen mit Filtern, wie BRET oder Chroma-Glow, durchgeführt werden.

Die erfindungsgemäße Anordnung vermeidet diese Nachteile und hat darüber hinaus weitere Vorteile.

Zunächst ist der Spiegel, der das Anregungslicht zur Probe lenkt, nicht Bestandteil eines Moduls, weil mit der Erfindung eine universell brauchbare Anordnung gefunden wurde, die nicht entsprechend dem gewählten Messprinzip jeweils geändert werden muss. Daher müssen diese Funktionen nicht wieder in jedem Modul enthalten sein, wodurch diese einfacher, kleiner und billiger werden.

Wegen der hohen optischen Effizienz der Reflexionskammer kann auch Chemilumineszenz mit derselben Optik und demselben Detektor wie bei der Fluoreszenz gemessen werden, und zwar mit höchster Empfindlichkeit.

Injektion von Reagenzien in die Messposition ist möglich, außerdem können wellenlängenabhängige Chemilumineszenzmessungen durch Einbringen von Filtern in den optischen Pfad erfolgen.

Da die Strahlung nicht durch Aperturen in das Modul eintritt, wird auch die mechanische Justierung unkritischer, was bei austauschbaren Modulen wichtig ist. Beim erfindungsgemäßen Aufbau werden auch keine am Modul befindlichen Aperturöffnungen zur Einstellung des Durchmessers des auf die Probe treffenden Lichtstrahles verwendet, da hierzu das direkt über der Probe befindliche Blenden rad 12 dient, welches Blenden mit unterschiedlichen Durchmessern und Formen enthält.

Um maximale Flexibilität bei der Auswahl der zu messenden Wellenlängen zu erhalten, können Geräte auch mit Monochromatoren ausgerüstet werden. Mit diesen können über weite Spektralbereiche die gewünschten Wellenlängen ausgewählt werden. Zur optimalen Unterdrückung nicht erwünschter Wellenlängen werden Doppelmonochromatoren verwendet, von denen sich einer im Anregungslichtpfad, ein zweiter im Emissionslichtpfad befindet.

Allerdings haben Monochromatoren gegenüber Filtern auch Nachteile, da sie in einigen Spektralbereichen zu deutlich niedrigeren Nachweisempfindlichkeiten bei Multi-Label-Readern führen. Aus diesem Grunde wird gewünscht, dass in einem einzigen Gerät wahlweise mit Filtern oder mit Monochromatoren gemessen werden kann, wobei die Umschaltung zwischen den beiden Betriebsarten so einfach wie möglich sein soll.

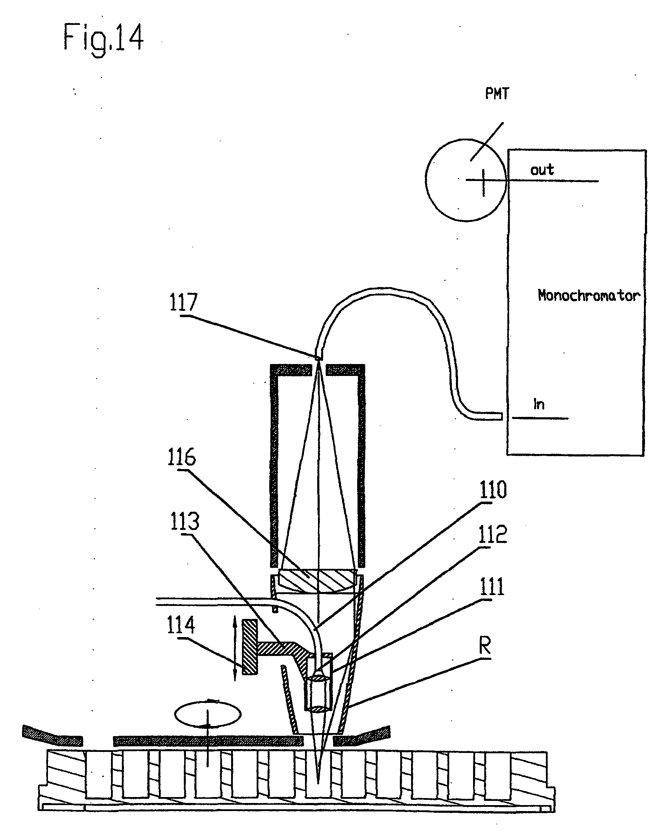

Zur Messung mit Monochromatoren eignet sich zum Lichttransport in die Reflexionskammer die in Abb. 14 gezeigte Anordnung mit einem Lichtleiter 110 und einem Emitterkopf 111. Das Ende des Lichtleiters 112 wird in einer Buchse fixiert.

Das austretende divergente Licht wird durch eine oder zwei ebenfalls im Emitterkopf fixierte Linsen auf einen Brennpunkt fokussiert, der z. B. in der Probe liegt. Der Emitterkopf wird über ein Verbindungsstück 113 mit einer Haltevorrichtung 114 verbunden. In einer weiteren Ausgestaltung der Erfindung kann die Haltevorrichtung und damit der Emitterkopf in der Achse der Reflexionskammer bewegt und unterschiedlich positioniert werden, wodurch sich der Brennpunkt in gleicher Weise ändert. Dies erlaubt eine Anpassung an unterschiedliche Formate und Füllgrade von Mikroplatten.

Auch ist für die Messung der Lichtabsorption mit einem unter dem transparenten Boden einer Mikroplatte positionierten Detektor eine ganz andere Fokusposition erforderlich als bei einer Fluoreszenzmessung.

Der Brennpunkt kann auch oberhalb der Probe positioniert werden, so dass darunter ein divergentes Lichtbündelt entsteht. Dies kann wünschenswert sein, um die gesamte Bodenfläche eines Probennäpfchens mit Anregungslicht zu bestrahlen.

Die Einbringung des Anregungslichtes in die Reflexionskammer mit einem Lichtleiter ist zweckmäßig, wenn im Anregungspfad ein Monochromator benutzt wird und der Lichtleiter das Licht direkt vom Ausgang des Monochromators in den Emitterkopf bringt. Der Lichtleiter kann durch entsprechende Anordnung der Fasern gleichzeitig dazu dienen, das rechteckige Profl des Lichts am Austrittsspalt des Monochromators in ein rundes Profil am Ende des Lichtleiters im Emitterkopf zu wandeln.

Wenn das Licht im Emissionspfad wiederum einem Monochromator zugeführt werden soll, so ist die Ausführung der Reflexionskammer als Teil eines innen verspiegelten Rotationsellipsoids zweckmäßig, das die von der Probe emittierte Strahlung auf einen Lichtleiter fokussiert.

Die Reflexionskammer kann auch ein Rotationsparaboloid sein, wobei das aus der oberen Öffnung austretende, im Wesentlichen parallele Licht mit einer Linse (116) auf den Eintrittsquerschnitt des Lichtleiters (117) fokussiert wird.

Dieser Lichtleiter kann am Eingang einen runden und am Ausgang, also vor dem Eintrittsspalt, einen rechteckigen Querschnitt haben, der dem Eintrittsspalt des Emissions-Monochromators entspricht.

Die hier beschriebene Anordnung mit Lichtleiter und Emitterkopf ist nicht auf die Verwendung von Monochromatoren begrenzt. Der Lichtleiter im Anregungspfad kann das Licht auch nach Durchgang durch Filter und entsprechende Fokussierung auf seinen Eingangsquerschnitt, der in diesem Falle rund sein könnte, in die Reflexionskammer bringen.

In einer weiteren Ausgestaltung der Erfindung wird das Anregungslicht bis unmittelbar über die Probe nach außen vollständig abgeschirmt geführt.

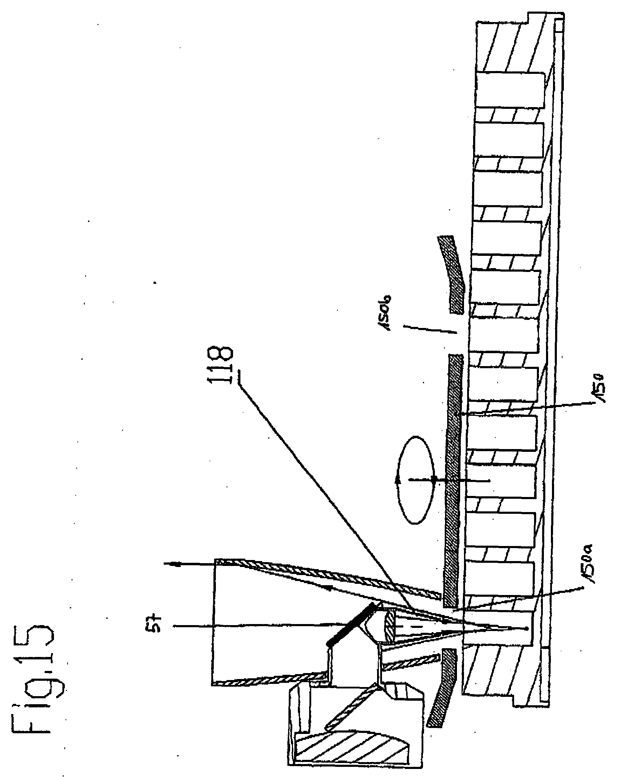

Die Figur 15 zeigt eine Ausgestaltung. Bei der Verwendung eines abgeschirmten Umlenkspiegels 57 wird die seitliche Abschirmung des Anregungslichts zwischen Umlenkspiegel 57 und Probe fortgesetzt und zwar im wesentlichen in Form eines Rohres 118, welches sich nach unten verengt, um möglichst wenig Emissionslicht zu verlieren. Kurz über der Probe kann sich noch eine fokussierende Linse befinden, um einen besonders schlanken Anregungsstrahl von weniger als 1 mm Durchmesser zu erreichen.

Die über der Probe gelegene Lichtaustrittsöffnung stellt gleichzeitig eine Blende dar, bei welcher sichergestellt ist, dass die innen auflaufende Streustrahlung nicht in den Emissionsstrahlengang gelangen und eine Erhöhung der Hintergrundstrahlung verursachen kann. Die innere und äußere Oberfläche des Rohres 118 beziehungsweise des Abschirmrohres 119 ist zweckmässigerweise lichtabsorbierend ausgeführt.

Der Bereich der Abschirmung zwischen der sich über der Probe befindlichen Linse und der Probe kann modular gestaltet sein, wobei diverse auf einem Schieber oder einer Scheibe 150 befindliche Blendenteile mit unterschiedlichen Austrittsöffnungen 150a, 150b oder verschiedenen optischen Komponenten gegeneinander ausgetauscht werden können. Ein Beispiel ist eine Anordnung zur Messung von Fluoreszenzpolarisation. Es handelt sich um eine Variante der zuvor beschriebenen und in Fig.9 dargestellten Anordnung derart, dass der gesamte Anregungslichtweg bis unmittelbar zum zentralen kreisförmigen Polarisationsfilter abgeschirmt ist. Mit Hilfe des Schiebers bzw. der Scheibe werden die beiden Filterkonfigurationen nacheinander in Position gebracht.

Bei einer Reihe von Messverfahren, wie z.B. BRET, FRET oder TR-FRET ist es erforderlich, dass aus derselben Probe die Intensität des emittierten Lichtes in zwei unterschiedlichen Wellenlängenbereichen gemessen wird. Üblicherweise werden dazu nacheinander zwei Messungen mit unterschiedlichen optischen Filtern vogenommen.

Das Anregungslicht kann auch von einem Monochromator im Anregungspfad kommen.

Die Detektoren können entweder direkt hinter den Emissionsfiltew stehen oder es werden noch weitere optische Komponenten wie z.B. Reflektoren, Linsen oder Blenden zwischen Filter und Detektoren positioniert.

Für Standard-Lumineszenzmessungen, bei denen keine Filter benötigt werden, können die Signale beider Detektoren addiert werden, um maximale Empfindlichkeit zu erreichen. Wenn die beiden Detektoren schnelle Photon-Counter sind, können sie auch mit einer Koinzinzidenzschaltung betrieben werden, um als Szintillationszähler Radioaktivitätsmessungen mit höchster Empfindlichkeit zu erlauben.

### Bezugszeichen

- AF: Anregungslichtpfad
- EF: Emissionslichtpfad
- R: Reflexionskammer
- 10: Mikrotiterplatte
- 11: Probenbehälter
- 12: Blendenrad
- 20,21: erstes Reflektorelement
- 20A,21A: Innenwandung
- BP1, BP2, BP3: Brennpunkte
- 30: Emissionsfilter
- 31: Hohlzylinder
- 40: Detektor
- 50: Lichtquelle
- 51: Blende
- 52: Linse
- 53: Anregungsfilter
- 54: Fokussierlinse
- a1: erster Abstand
- a2: zweiter Abstand
- 55: Spiegel
- 56: Referenzdetektor
- 57: Umlenkspiegel
- 58: Rohr
- 58A: horizontaler Abschnitt
- 58B: vertikaler Abschnitt
- 59: Halterung
- 60: Lasermodul
- 61: Injektionselement
- 62: Lichtleiter
- 62A: inneres Lichtleiterbündel
- 62B: äusseres Lichtleiterbündel
- 63: U-Bügel
- 63a: erste Öffnung
- 70: Detektor
- 71,72: Modul
- 73: Trägerschiene
- 74: Schraube
- 75: Antriebsrad
- 76: Zahnriemen
- 77: Filterschieber
- 110: Lichtleiter
- 111: Emitterkopf
- 112: Ende des Lichtleiters
- 113: Verbindungsstück
- 114: Haltevorrichtung
- 116: Linse
- 118: Rohr
- 119: Abschirmrohr
- 150: Scheibe
- 150a, 150b: Austrittsöffnung

## Patentansprüche

1. Mehrfachmessgerät zur wahlweisen Messung der Lumineszenz oder Fluoreszenz einer sich in einem Probenbehälter (11) einer Mikrotiterplatte befindenden Probe, wobei das Mehrfachmessgerät aufweist:
- einen Anregungslichtpfad (AF) für Fluoreszenzmessungen, welcher eine Lichtquelle und ein sich über dem Probenbehälter befindendes zweites Reflektorelement aufweist,
- einen Emissionslichtpfad für Lumineszenz- und Fluoreszenzmessungen mit einem Emissionsfilter und einem Detektor, wobei der Emissionsfilter oberhalb des zweiten Reflektorelements und der Detektor oberhalb des Emissionsfilters angeordnet ist,
**dadurch gekennzeichnet, dass** der Emissionslichtpfad (EF) zwischen dem zumindest einen Probenbehälter (11) und dem Emissionsfilter durch ein erstes, eine Reflexionskammer (R) umschliessendes Reflektorelement (20) geführt ist, das zumindest einen Teil des vom Probenbehälter (11) emittierten Lichts gerichtet auf den Emissionsfilter wirft, und dass der Anregungslichtpfad (AF) in der Reflexionskammer (R) bis oberhalb des Probenbehälters (11) in einem lichtdichten Rohr geführt ist, in welchem das zweite Reflektorelement gehalten ist, wobei die Reflexionskammer ( R ) des ersten Reflektorelements (20) eine verspiegelte Innenwandung (20A) aufweist, die die Form eines Abschnitts eines Rotationsparaboloids mit einer Schnittkurve der Gleichung y = n mal x² hat, der sich im Wesentlichen vom Probenbehälter (11) bis zum Emissionsfilter (30) erstreckt, wobei der Brennpunkt (BP1) des Rotationsparaboloids innerhalb des Probenbehälters (11) liegt.

2. Vorrichtung nach Anspruch 1, **dadurch gekennzeichnet, dass** der Wert von n zwischen 3 und 5 liegt.

3. Vorrichtung nach Anspruch 1, **dadurch gekennzeichnet, dass** die Reflexionskammer (R) von der Innenwandung von aneinander anschließenden Kegelstümpfen gebildet ist, die sich im wesentlichen vom Probenbehälter (11) bis zum Emissionsfilter (30) erstrecken, und deren Schnittkurven die Schnittkurve eines Rotationsaraboloids approximieren, dessen Brennpunkt vorzugsweise innerhalb des Probenbehälter zu liegen kommt.

4. Vorrichtung nach Anspruch 1, **dadurch gekennzeichnet, dass** das zweite Reflektorelement das Anregungslicht im Wesentlichen senkrecht auf die Oberfläche der Probe führt.

5. Vorrichtung nach Anspruch 1, **dadurch gekennzeichnet, dass** die Oberfläche des Rohres (58) lichtabsorbierend ausgeführt ist.

6. Vorrichtung nach Anspruch 5, **dadurch gekennzeichnet, dass** das Rohr (58) zwei Abschnitte (58A,58B) aufweist, die in der Reflexionskammer (R) gegeneinander um 90° abgewinkelt sind, wobei die Längsachse des unteren, vertikalen Abschnitts (58B) vorzugsweise in der Achse des Paraboloidabschnitts zu liegen kommt.

7. Vorrichtung nach Anspruch 4 bis 6, **dadurch gekennzeichnet, dass** das zweite Reflektorelement ein planer Umlenkspiegel (57) ist, der im Rohr (58) derart positioniert ist, dass er das Anregungslicht vom ersten, horizontalen Abschnitt (58A) in den zweiten vertikalen Abschnitt (58B) des Rohres (58) reflektiert.

8. Vorrichtung nach Anspruch 5-7, **dadurch gekennzeichnet, dass** der vertikale Abschnitt (58B) des Rohrs (58) derart in der Reflexionskammer ( R ) angeordnet und dimensioniert ist, dass seine lichtabsorbierende Oberfläche denjenigen Teil des Emissionslichtes, der in einem unerwünschten Winkelbereich (alpha) aus dem Probenbehälter (11) austritt, absorbiert.

9. Vorrichtung nach Anspruch 1, **dadurch gekennzeichnet, dass** im Anregungslichtpfad (AF) eine Fokussierlinse (54) angeordnet ist.

10. Vorrichtung nach Anspruch 1 , **dadurch gekennzeichnet, dass** der Brennpunkt (BP1) des Rotationsparaboloids in einem ersten Abstand (a1) zum Boden (11A) des Probengefäßes (11) zu liegen kommt.

11. Vorrichtung nach Anspruch 9, **dadurch gekennzeichnet, dass** der Brennpunkt (BP2) der Fokussierlinse (54) so gewählt ist, dass er in einem zweiten Abstand (a2) zum Boden (11A) des Probengefäßes (11) innerhalb des Probengefäßes (11) zu liegen kommt.

12. Vorrichtung nach Anspruch 10 und 11, **dadurch gekennzeichnet, dass** der erste Abstand (a1) grösser ist als der zweite Abstand (a2).

13. Vorrichtung nach Anspruch 12, **dadurch gekennzeichnet, dass** bei der Verwendung von handelsüblichen Mikrotiterplatten als Probengefäß die Abstandsdifferenz (a1 - a2) etwa 2 mm beträgt.

14. Vorrichtung nach Anspruch 1, **dadurch gekennzeichnet, dass** das erste Reflektorelement (20) im Abstand vom Detektor (40) endet.

15. Vorrichtung nach Anspruch 14, **dadurch gekennzeichnet, dass** zwischen dem Emissionsfilter (30) und dem Detektor (40) ein Hohlzylinder (31) angeordnet ist, dessen Innenwandung denjenigen Teil der Emissionsstrahlung, der nicht auf die Innenwandung (20A) des Rotationsparaboloids (20) auftrifft und somit nicht gerichtet verläuft, absorbiert.

16. Vorrichtung nach Anspruch 15, **dadurch gekennzeichnet, dass** die Innenwandung des Hohlzylinders (31) aus schwarzem Filz besteht.

17. Vorrichtung nach Anspruch 15, **dadurch gekennzeichnet, dass** die Innenwandung des Hohlzylinders (31) mehrfach reflektierende Rillen aufweist.

18. Vorrichtung nach Anspruch 15, **dadurch gekennzeichnet, dass** die Höhe (H) des Hohlzylinders (31) 10 bis 20 mm beträgt.

19. Vorrichtung nach Anspruch 1, **dadurch gekennzeichnet, dass** im ersten Reflektorelement (20) ein Lasermodul (60) zur Einstrahlung von Licht in die Probe in den Probenbehälter (11) zeigend gehalten ist.

20. Vorrichtung nach Anspruch 1, **dadurch gekennzeichnet, dass** im ersten Reflektorelement (20) mindestens ein injektionselement (61) zur Einbringung von Reagenzien in die Probe in den Probenbehälter (11) zeigend gehalten ist.

21. Vorrichtung nach Anspruch 1, **dadurch gekennzeichnet, dass** zwischen dem unteren Ende der Reflexionskammer (R) und dem Probenbehälter (11) eine Haltevorrichtung für optische Elemente dreh- oder verschiebbar gelagert ist.

22. Vorrichtung nach Anspruch 21, **dadurch gekennzeichnet, dass** die optischen Elemente mindestens zwei Polarisationsfilteranordnungen beinhalten.

23. Vorrichtung nach Anspruch 21 und 22, **dadurch gekennzeichnet, dass** die Haltevorrichtung ein Blendenrad (12) ist, in dem verschiedene Blenden und die Polarisationsfilteranordnungen derart aufgenommen sind, dass jeweils eines der optischen Elemente in den Strahlengang bringbar ist.

24. Vorrichtung nach Anspruch 23, **dadurch gekennzeichnet, dass** zwei Polarisationsfilteranordnungen (PF1,PF2) vorgesehen sind, die jeweils in ihrer Mitte ein erstes, kreisförmiges Polarisationsfilter (PF11,PF21) und ein dieses umgebendes zweites, ringförmiges Polarisationsfilter (PF12,PF22) aufweisen, wobei die Polarisationsrichtungen der Polarisationsfilter der ersten Polarisationsfilteranordnung (PF1) parallel sind, und die der zweiten Polarisationsfilteranordnung (PF2) senkrecht zueinander stehen.

25. Vorrichtung nach Anspruch 24, **dadurch gekennzeichnet, dass** die Bauteile des Anregungslichtpfades (AF) und die Abmessungen der Polarisationsfilter derart aneinander angepasst sind, dass die Anregungsstrahlung nur durch den ersten Polarisationsfilter (PF11,PF21) in die Probe eintritt, und dass im Emissionslichtpfed (EF) vom austretenden Licht nur der den zweiten Polarisationsfilter (PF12,PF22) passierende Anteil den Detektor (40) erreicht.

26. Vorrichtung nach Anspruch 1, **dadurch gekennzeichnet, dass** sich zwischen dem unteren Ende der Reflexionskammer (R) und einem transparenten Boden eines Probenbehälters (11) ein Lichtleiter (62) befindet, in dem das Anregungslicht und das Emissionslicht geführt sind.

27. Vorrichtung nach Anspruch 26, **dadurch gekennzeichnet, dass** der Lichtleiter (62) aus einem inneren Lichtleiterbündel (62A) und einem dieses umgebenden, äußeren Lichtleiterbündel (62B) besteht.

28. Vorrichtung nach einem der vorangehenden Ansprüche, **dadurch gekennzeichnet, dass** in den Raum zwischen dem Eintrittsfenster des Detektors (70) und der Austrittsöffnung der Reflexionskammer (R) mindestens ein Modul (71,72) mit einer Modul-Entrittsöffnung und wenigstens einer Modul-Austrittsöffnung zur lichtdichten Verbindung der Austrittsöffnung der Reflexionskammer (R) mit dem Eintrittsfenster des Detektors (70) anordenbar ist.

29. Vorrichtung nach Anspruch 28, **dadurch gekennzeichnet, dass** wenigstens zwei Module (71,72) vorhanden sind, welche alternativ in den Raum zwischen dem Eintrittsfenster des Detektors und der Austrittsöffnung der Reflexionskammer (R) einbringbar sind.

30. Vorrichtung nach Anspruch 28 oder Anspruch 29, **dadurch gekennzeichnet, dass** die Module (71,72), jedoch mindestens eines, an einer beweglichen Trägerschiene (73) gehalten sind.

31. Vorrichtung nach Anspruch 30, **dadurch gekennzeichnet, dass** die Module (71,72) auswechselbar an der Trägerschiene (73) gehalten sind.

32. Vorrichtung nach einem der Ansprüche 28 bis 31, **dadurch gekennzeichnet, dass** der Detektor (70) an einem oberen Schenkel eines liegenden U-Bügels (63) gehalten ist, dessen gegenüberliegender unterer Schenkel mit dem Reflektorelement verbunden ist, wobei oberer und unterer Schenkel des U-Bügels jeweils eine Durchbrechung aufweisen, welche dem Eintrittsfenster beziehungsweise der Austrittsöffnung zugeordnet sind.

33. Vorrichtung nach einem der vorangehenden Ansprüche, **dadurch gekennzeichnet, dass** aus der Reflexionskammer (R) austretendes Emissionslicht einem Monochromator zugeführt wird.

34. Vorrichtung nach Anspruch 33, **dadurch gekennzeichnet, dass** das Emissionslicht über einen Lichtleiter (117) dem Monochromator zugeführt wird.

35. Vorrichtung nach Anspruch 33, **dadurch gekennzeichnet, dass** zwischen Reflexionskammer und Lichtleiter (117) eine Sammellinse vorgesehen ist, die das Licht auf den Eintrittsquerschnitt des Lichtleiters fokussiert.

36. Vorrichtung nach einem der vorangehenden Ansprüche, **dadurch gekennzeichnet, dass** im Anregungslichtpfad (AF) ein Monochromator vorgesehen ist.

37. Vorrichtung nach einem der Ansprüche 33 bis 36, **dadurch gekennzeichnet, dass** die verwendeten Monochromatoren Doppelmonochromatoren sind.

## Claims

1. Multiple-measuring device for the optional measurement of luminescence or fluorescence of a sample located in a sample container (11) of a micro-titre plate, wherein the multiple-measuring device has:
- an excitation light path (AF) for fluorescence measurements, which has a light source and a second reflector element located above the sample container,
- an emission light path for luminescence and fluorescence measurements with an emission filter and a detector, wherein the emission filter is arranged above the second reflector element and the detector above the emission filter,
**characterised in that** the emission light path (EF) between the at least one sample container (11) and the emission filter is routed through a first reflector element (20) surrounding a reflection chamber (R), whereby said reflector element throws at least part of the light emitted by the sample container (11) onto the emission filter, and that the excitation light path (AF) in the reflection chamber (R) is routed in a light-proof pipe through to over the sample container (11), in which pipe the second reflector element is held, wherein the reflection chamber (R) of the first reflector element (20) has a mirrored internal wall (20A) which is in the form of a section of a rotation paraboloid with a sectional curve of the equation y = n times x², which basically extends from the sample container (11) through to the emission filter (30), wherein the focus (BP1) of the rotational paraboloid is inside the sample container (11).

2. Device according to claim 1, **characterised in that** the value of n is between 3 and 5.

3. Device according to claim 1, **characterised in that** the reflection chamber (R) is formed by the internal wall of adjacent truncated cones which extend basically from the sample container (11) through to the emission filter (30), and the sectional curves of which approximate the sectional curves of a rotational paraboloid the focus of which preferably comes to lie inside the sample container.

4. Device according to claim 1, **characterised in that** the second reflector element routes the excitation light basically in a perpendicular direction onto the surface of the sample.

5. Device according to claim 1, **characterised in that** the surface of the pipe (58) is made light-absorbent.

6. Device according to claim 5, **characterised in that** the pipe (58) has two sections (58A, 58B), which are angled in relation to each other by 90° in the reflection chamber (R), wherein the longitudinal axis of the lower vertical section (58B) preferably comes to lie in the axis of the paraboloid section.

7. Device according to any one of claims 4 to 6, **characterised in that** the second reflector element is a flat deflection mirror (57) which is positioned in the pipe (58) such that it reflects the excitation light from the first horizontal section (58A) into the second vertical section (58B) of the pipe (58).

8. Device according to any one of claims 5 to 7, **characterised in that** the vertical section (58B) of the pipe (58) is arranged in the reflection chamber (R) in such a way that its light-absorbing surface absorbs the part of the emission light which emerges from the sample container (11) in an unwanted angle range (alpha).

9. Device according to claim 1, **characterised in that** a focussing lens (54) is arranged in the excitation light path (AF).

10. Device according to claim 1, **characterised in that** the focus (BP1) of the rotational paraboloid comes to lie at a first distance (a1) to the floor (11A) of the sample vessel (11).

11. Device according to claim 9, **characterised in that** the focus (BP2) of the focussing lens (54) is selected so that it comes to lie at a second distance (a2) to the floor (11A) of the sample vessel (11) inside the sample vessel (11).

12. Device according to claim 10 or 11, **characterised in that** the first distance (a1) is greater than the second distance (a2).

13. Device according to claim 12, **characterised in that** where standard commercial micro-titre plates are used as the sample vessel, the difference in distance (a1 - a2) is around 2 mm.

14. Device according to claim 1, **characterised in that** the first reflector element (20) ends at a distance from the detector (40).

15. Device according to claim 14, **characterised in that** a hollow cylinder (31) is arranged between the emission filter (30) and the detector (40), whereby the inner wall of said cylinder absorbs the part of the emission radiation which does not hit the internal wall (20A) of the rotational paraboloid (20) and thus does not run in an oriented manner.

16. Device according to claim 15, **characterised in that** the internal wall of the hollow cylinder (31) is made of black felt.

17. Device according to claim 15, **characterised in that** the internal wall of the hollow cylinder (31) has multiply reflective grooves.

18. Device according to claim 15, **characterised in that** the height (H) of the hollow cylinder (31) is 10 to 20 mm.

19. Device according to claim 1, **characterised in that** the first reflector (20) a laser module (60) to radiate light into the sample is held pointing into the sample container (11).

20. Device according to claim 1, **characterised in that** in the first reflector (20) at least one injection element (61) to introduce reagents into the sample is held pointing into the sample container (11).

21. Device according to claim 1, **characterised in that** between the lower end of the reflection chamber (R) and the sample container (11), a holding device for optical elements is mounted so that it can be rotated or moved.

22. Device according to claim 21, **characterised in that** the optical elements contain at least two polarisation filter arrangements.

23. Device according to claim 21 and 22, **characterised in that** the holding device is a diaphragm wheel (12) in which various diaphragms and the polarisation filter arrangements are held in such a way that in each case one of the optical elements can be moved into the beam path.

24. Device according to claim 23, **characterised in that** two polarisation filter arrangements (PF1, PF2) are provided, each of which has in its centre a first circular polarisation filter (PF11, PF21) and a second annular polarisation filter (PF12, PF22) around it, wherein the polarisation directions of the polarisation filters of the first polarisation filter arrangement (PF1) are parallel, and those of the second polarisation filter arrangement (PF2) are perpendicular to each other.

25. Device according to claim 24, **characterised in that** the components of the excitation light path (AF) and the dimensions of the polarisation filters are adapted to each other in such a way that the excitation radiation enters the sample only through the first polarisation filter (PF11, PF21), and that in the emission light path (EF) of the emerging light, only the part passing through the second polarisation filter (PF12, PF22) reaches the detector (40).

26. Device according to claim 1, **characterised in that** between the lower end of the reflection chamber (R) and a transparent base of a sample container (11), there is a light conductor (62) in which the excitation light and the emission light are routed.

27. Device according to claim 26, **characterised in that** the light conductor (62) consists of an inner light conductor bundle (62A) and an outer light conductor bundle (62B) surrounding it.

28. Device according to any one of the preceding claims, **characterised in that** in the space between the entry window of the detector (70) and the exit opening of the reflection chamber (R) at least one module (71, 72) with a module entry opening and at least one module exit opening can be arranged for the light-proof connection of the exit opening of the reflection chamber (R) to the entry window of the detector (70).

29. Device according to claim 28, **characterised in that** there are at least two modules (71, 72) which can be inserted in an alternating manner into the space between the entry window of the detector and the exit opening of the reflection chamber (R).

30. Device according to claim 28 or claim 29, **characterised in that** the modules (71, 72), or however at least one, are held on a moveable carrier rail (73).

31. Device according to claim 30, **characterised in that** the modules (71, 72) are held on the moveable carrier rail (73) such that they can be replaced.

32. Device according to any one of claims 28 to 31, **characterised in that** the detector (70) is held on an upper branch of a lying U-bolt (63), the opposite lower branch of which is connected to the reflector element, wherein the upper and lower branches of the U-bolt each have an opening which is assigned to the entry window and exit opening respectively.

33. Device according to any one of the preceding claims, **characterised in that** emission light emerging from the reflection chamber (R) is supplied to a monochromator.

34. Device according to claim 33, **characterised in that** the emission light is supplied to the monochromator by means of a light conductor (117).

35. Device according to claim 33, **characterised in that** a collecting lens is provided between the reflection chamber and the light conductor (117), said lens focussing the light on the entry diameter of the light conductor.

36. Device according to any one of the preceding claims, **characterised in that** a monochromator is provided in the excitation light path (AF).

37. Device according to any one of claims 33 to 36, **characterised in that** the monochromators used are dual monochromators.

## Revendications

1. Appareil de mesure multiple destiné à la mesure sélective de la luminescence ou la fluorescence d'un échantillon se trouvant dans un support d'échantillons (11) d'une plaque de microtitration, où l'appareil de mesure multiple présente :
- Un chemin lumineux d'excitation (AF) pour des mesures de fluorescence, ledit chemin présente une source de lumière et un second élément réflecteur situé au-dessus du support d'échantillons,
- Un chemin lumineux d'émission pour des mesures de fluorescence et de luminescence avec un filtre d'émission et un détecteur, dans lequel le filtre d'émission est disposé au-dessus du second élément réflecteur et le détecteur au-dessus du filtre d'émission,
**caractérisé en ce que** le chemin lumineux d'émission (EF) est acheminé entre ledit au moins un support d'échantillons (11) et le filtre d'émission via un premier élément réflecteur (20) qui entoure une chambre de réflexion (R) et qui projette au moins une partie de la lumière émise du support d'échantillons (11) de façon dirigée sur le filtre d'émission, et **en ce que** le chemin lumineux d'excitation (AF) est guidé dans un tube étanche à la lumière dans la chambre de réflexion (R) jusqu'au-dessus du support d'échantillons (11), le second élément réflecteur étant maintenu dans ledit tube, la chambre de réflexion (R) du premier élément réflecteur (20) présentant une paroi interne réflectrice (20A), qui a la forme d'un tronçon d'un paraboloïde de révolution dont une courbe de section a pour équation y = n fois x², ledit chemin lumineux d'émission s'étendant sensiblement du support d'échantillons (11) jusqu'au filtre d'émission (30), et le foyer (BP1) du paraboloïde de révolution se situant à l'intérieur du support d'échantillons (11).

2. Dispositif selon la revendication 1, **caractérisé en ce que** la valeur de n se situe entre 3 et 5.

3. Dispositif selon la revendication 1, **caractérisé en ce que** la chambre de réflexion (R) est formée par la paroi interne de troncs de cône se raccordant les uns aux autres, qui s'étendent sensiblement du support d'échantillons (11) vers le filtre d'émission (30), et dont les courbes de section approximent la courbe de section d'un paraboloïde de révolution, dont le foyer vient se situer de préférence à l'intérieur du support d'échantillons.

4. Dispositif selon la revendication 1, **caractérisé en ce que** le second élément réflecteur conduit la lumière d'excitation sensiblement perpendiculairement sur la surface de l'échantillon.

5. Dispositif selon la revendication 1, **caractérisé en ce que** la surface du tube (58) est réalisée de manière à absorber la lumière.

6. Dispositif selon la revendication 5, **caractérisé en ce que** le tube (58) présente deux tronçons (58A, 58B), qui forment un angle de 90° dans la chambre de réflexion (R), l'axe longitudinal du tronçon vertical inférieur (58B) vient de préférence se situer dans l'axe du tronçon de paraboloïde.

7. Dispositif selon la revendication 4 à 6, **caractérisé en ce que** le second élément réflecteur est un miroir de déviation plan (57), qui est positionné dans le tube (58), de sorte que la lumière d'excitation passe par réflexion du premier tronçon (58A), horizontal, dans le second tronçon (58B), vertical, du tube (58).

8. Dispositif selon la revendication 5 à 7, **caractérisé en ce que** le tronçon vertical (58B) du tube (58) est dimensionné et disposé dans la chambre de réflexion (R) de sorte que sa surface absorbant la lumière absorbe la partie de la lumière d'émission qui sort du support d'échantillons (11) dans une plage angulaire (alpha) indésirable.

9. Dispositif selon la revendication 1, **caractérisé en ce qu'**une lentille de focalisation (54) est disposée dans le chemin lumineux d'excitation (AF).

10. Dispositif selon la revendication 1, **caractérisé en ce que** le foyer (BP1) du paraboloïde de révolution vient se situer dans un premier écartement (a1) du fond (11A) du support d'échantillons (11).

11. Dispositif selon la revendication 9, **caractérisé en ce que** le foyer (BP2) de la lentille de focalisation (54) est choisi de façon à venir se situer dans un second écartement (a2) du fond (11A) du support d'échantillons (11) à l'intérieur du support d'échantillons (11).

12. Dispositif selon la revendication 10 et 11, **caractérisé en ce que** le premier écartement (a1) est plus grand que le second écartement (a2).

13. Dispositif selon la revendication 12, **caractérisé en ce que** la différence d'écartement (a1-a2) se chiffre à environ 2 mm si l'on utilise des plaques de microtitration usuelles comme support d'échantillons.

14. Dispositif selon la revendication 1, **caractérisé en ce que** le premier élément réflecteur (20) se termine à distance du détecteur (40).

15. Dispositif selon la revendication 14, **caractérisé en ce qu'**un cylindre creux (31) est disposé entre le filtre d'émission (30) et le détecteur (40), la paroi interne du cylindre creux absorbant la partie du rayonnement d'émission qui n'est pas incidente sur la paroi interne (20A) du paraboloïde de révolution (20) et donc n'est pas dirigée.

16. Dispositif selon la revendication 15, **caractérisé en ce que** la paroi interne du cylindre creux (31) se compose de feutre noir.

17. Dispositif selon la revendication 15, **caractérisé en ce que** la paroi interne du cylindre creux (31) comprend de multiples rainures réfléchissantes.

18. Dispositif selon la revendication 15, **caractérisé en ce que** la hauteur (H) du cylindre creux (31) se chiffre de 10 à 20 mm.

19. Dispositif selon la revendication 1, **caractérisé en ce qu'**un module laser (60) est maintenu dans le premier élément réflecteur (20) en étant orienté pour le rayonnement de lumière dans l'échantillon placé dans le support d'échantillons (11).

20. Dispositif selon la revendication 1, **caractérisé en ce qu'**au moins un élément d'injection (61) est maintenu dans le premier élément réflecteur (20) en étant orienté pour l'introduction de réactifs dans l'échantillon placé dans le support d'échantillons (11).

21. Dispositif selon la revendication 1, **caractérisé en ce qu'**un dispositif de maintien pour des éléments optiques est monté de manière rotative ou déplaçable entre l'extrémité inférieure de la chambre de réflexion (R) et le support d'échantillons (11).

22. Dispositif selon la revendication 21, **caractérisé en ce que** les éléments optiques comprennent au moins deux ensembles de filtres polarisants.

23. Dispositif selon la revendication 21 et 22, **caractérisé en ce que** le dispositif de maintien est une roue à diaphragmes (12), dans laquelle les différents diaphragmes et les ensembles de filtres polarisants sont intégrés de sorte qu'à chaque fois l'un respectif des éléments optiques peut être amené dans la marche des rayons.

24. Dispositif selon la revendication 23, **caractérisé en ce qu'**il est prévu deux ensembles de filtres polarisants (PF1, PF2), qui présentent chacun en son centre un premier filtre polarisant circulaire (PF11, PF21) et un second filtre polarisant annulaire (PF12, PF22) entourant le premier, où les directions de polarisation du filtre polarisant du premier ensemble de filtres polarisants (PF1) sont parallèles, et celles du second ensemble de filtres polarisants (PF2) sont perpendiculaires entre elles.

25. Dispositif selon la revendication 24, **caractérisé en ce que** les composants du chemin lumineux d'excitation (AF) et les dimensions du filtre polarisant sont adaptés les uns aux autres de telle sorte que le rayonnement d'excitation ne pénètre dans l'échantillon qu'à travers le premier filtre polarisant (PF11, PF21), et que, dans le chemin lumineux d'émission (EF) de la lumière sortante, seule la partie passant le deuxième filtre de polarisation (PF12, PF22) atteint le détecteur (40).

26. Dispositif selon la revendication 1, **caractérisé en ce qu'**un conducteur de lumière (62) se situe entre l'extrémité inférieure de la chambre de réflexion (R) et un fond transparent du support d'échantillons (11), la lumière d'excitation et la lumière d'émission étant conduites dans le conducteur de lumière (62).

27. Dispositif selon la revendication 26, **caractérisé en ce que** le conducteur de lumière (62) se compose d'un faisceau de fibres optiques internes et un faisceau de fibres optiques externe entourant le faisceau interne.

28. Dispositif selon l'une des revendications précédentes, **caractérisé en ce qu'**au moins un module (71, 72), comprenant une ouverture d'entrée du module et au moins une ouverture de sortie du module, est disposé dans l'espace entre la fenêtre d'entrée du détecteur (70) et l'ouverture de sortie de la chambre de réflexion (R), pour le raccordement étanche à la lumière de l'ouverture de sortie de la chambre de réflexion (R) avec la fenêtre d'entrée du détecteur (70).

29. Dispositif selon la revendication 28, **caractérisé en ce qu'**il y a au moins deux modules (71, 72) pouvant être introduits alternativement dans l'espace entre la fenêtre d'entrée du détecteur et l'ouverture de sortie de la chambre de réflexion (R).

30. Dispositif selon la revendication 28 ou la revendication 29, **caractérisé en ce que** les modules (71, 72), tout au moins un, sont maintenus sur un rail de support (73) mobile.

31. Dispositif selon la revendication 30, **caractérisé en ce que** les modules (71, 72) sont maintenus interchangeables sur le rail de support mobile (73).

32. Dispositif selon l'une des revendications 28 à 31, **caractérisé en ce que** le détecteur (70) est maintenu sur l'aile supérieure d'une armature en U (63) couché, dont l'aile inférieure opposée est reliée à l'élément réflecteur, les ailes, supérieure et inférieure, de l'armature en U présentant chacune une ouverture associée respectivement à la fenêtre d'entrée et à l'ouverture de sortie.

33. Dispositif selon l'une des revendications précédentes, **caractérisé en ce que** la lumière d'émission de la chambre de réflexion (R) alimente un monochromateur.

34. Dispositif selon la revendication 33, **caractérisé en ce que** la lumière d'émission alimente le monochromateur par l'intermédiaire d'un conducteur de lumière (117).

35. Dispositif selon la revendication 33, **caractérisé en ce qu'**il est prévu entre la chambre de réflexion et le conducteur de lumière (117), une lentille de convergence focalisant la lumière sur la section transversale d'entrée du conducteur de lumière.

36. Dispositif selon l'une des revendications précédentes, **caractérisé en ce qu'**un monochromateur est prévu dans le chemin lumineux d'excitation.

37. Dispositif selon les revendications 33 à 36, **caractérisé en ce que** les différents monochromateurs sont des doubles monochromateurs.
